Europäisches Patentamt

European Patent Office

Office européen des brevets

(11) Publication number: **0 079 668**
**B1**

# EUROPEAN PATENT SPECIFICATION

(45) Date of publication of patent specification: **26.02.86**

(21) Application number: **82304555.4**

(22) Date of filing: **27.08.82**

(51) Int. Cl.⁴: **A 01 N 25/26,** A 01 N 63/00,
A 01 N 57/30, A 01 N 57/28,
A 01 N 57/12, A 01 N 53/00,
A 01 N 47/24, A 01 N 47/16,
A 01 N 47/12, A 01 N 43/32,
A 01 N 41/06

(54) **Pesticide product and use and manufacture thereof.**

(30) Priority: **31.08.81 US 298097**
**03.08.82 US 404928**

(43) Date of publication of application:
**25.05.83 Bulletin 83/21**

(45) Publication of the grant of the patent:
**26.02.86 Bulletin 86/09**

(84) Designated Contracting States:
**AT BE CH DE FR GB IT LI LU NL SE**

(56) References cited:
**GB-A-2 075 344**
**US-A-3 771 994**
**US-A-4 102 806**
**US-A-4 282 208**

(73) Proprietor: **SIERRA CHEMICAL COMPANY**
**1001 Yosemite Drive**
**Milpitas California 95035 (US)**

(72) Inventor: **Gordon, Richard S.**
**20 Westmoreland Place**
**St. Louis Missouri, 63108 (US)**
Inventor: **Siemer, Sidney R.**
**5530 N. Feland**
**Fresno California 93711 (US)**
Inventor: **Marshall, Richard G.**
**2818 Oakmill Court**
**San Jose California 95121 (US)**

(74) Representative: **Brown, John David et al**
**FORRESTER & BOEHMERT Widenmayerstrasse**
**4/I**
**D-8000 München 22 (DE)**

EP 0 079 668 B1

Courier Press, Leamington Spa, England.

**0 079 668**

## Description

This invention relates to novel controlled-release pesticides and composite granules having controlled-release properties, to methods for making such pesticides and granules, and to methods for treating crops to protect them from pests of various kinds during their growing season.

### Background of the invention

Many materials used as pesticides are applied in excess or in multiple applications in order to sustain sufficient active ingredient in the environment to effect their end use, that is, an insecticide to control insects, a fungicide to control disease, herbicides for weed control, growth regulators to stunt plants or produce some other growth regulatory effect.

As an example, malathion, an organic phosphate material, is prone to rapid hydrolysis, and thus it is a relatively short-lived compound in the environment. Use of this material in a controlled release formulation could extend the usefulness of a single application. The single application would then have the same effect on insect control as do a series of separate applications in current practice.

Many advantages can be derived from this approach. The single application of controlled release material reduces the total cost of achieving net control, because it reduces the number of applications required in order to achieve control over the period of controlled release. The total amount of pesticide applied to the environment can also be reduced, since it is known that some active ingredient is lost to the environment each time the pesticide is applied, so that more than is actually needed had heretofore to be applied to achieve the desired level on the target. Further, control from a single application can now be extended for longer periods of time instead of the typical control pattern of peaks and valleys as a result of the active ingredient level fluctuating up and down over a wide range, as is typical with multiple short-residual application.

The use of membranes, coatings, encapsulations, and the like to control the release of *liquid* materials is well known for both agriculture and non-agricultural chemicals. Coated droplets, such as microcapsules, often depend upon rupturing, dissolution, or permeation of the coating to release microamounts of the contained liquid in order to sustain the release of active ingredient to the environment. Microencapsulation formulations typically have been used in cooperation with aqueous sprays, the microcapsules being suspended in the water.

Water-soluble or liquid plant nutrients, i.e., fertilizers, have been encapsulated on a macroencapsulation basis, typically as large particles, i.e., 8-mesh or 16-mesh granules. For plant nutrients large size particles are ideal, in order to maximize the slowness of the controlled release and to obtain the large volume needed per unit area, and thereby make application costs more economical. One manufacturer of coated plant nutrients bas stated that the ideal particle size would be the size of a golf ball. Such large particle sizes that have been desirable for fertilizer are not suitable for pesticides when applied alone.

Also, slab type pesticidal materials, i.e., having multiple layers of different polymers, have been ground up and used for foliar application, mechanically distributed from the air.

In the slow-release fertilizer macroencapsulated prior art, controlled release has taken place through the action of water passing through the coat or membrane and solubilizing the active ingredient so that it passed back out through the membrane into the surrounding liquid. During the whole period of the release, the coating generally remained substantially unattacked, in order that a slow, relatively uniform release of the water-soluble active substance can take place, resulting in relatively constant concentration of the active ingredient in the surrounding liquid.

It has often been proposed in the art that starting fertilizers could be combined, i.e., admixed or associated, with other substances, for instance, bactericides, herbicides, insecticides. It has also been proposed that such mixtures be coated with resin or other coating materials. It has further been proposed to make slow-release pesticide compositions with the pesticide linked to a substrate such as latex and regenerated by contact with water in use. However, the reduction or elimination of weeds, insects, and other pests has been expensive or less than satisfactory by the prior art teachings.

Even though controlled release has received much attention, and considerable art has developed in this area, controlled release formulations of *pesticides* are not readily available in the marketplace. With few exceptions, pesticides today occur as emulsifiable concentrates in one form or another, or as wettable powders to be diluted by water in liquid spray applications. Only in some narrow market situations are granular formulations available. Typically these granular formulations comprise an active ingredient coated onto or impregnated into clay-type carriers or, occasionally, coated around a sand granule. These materials generally release all, or a very high percentage of, their active ingredient content on their first exposure to water, whether this water be in the form of rain, water in an irrigation ditch or furrow, or water solutions in a soil matrix.

Typically, controlled release, as found in the market place, is associated most closely with an active ingredient impregnated into a polymer reservoir layer, overcoated with a polymer layer relatively impervious to the active ingredient, such as the "No-pest Strip", or the Hercon® strips. Some of these formulations have been tested in the field as ground up or shredded plastic strips and distributed onto the foliage aerially. These materials have had the problem of non-uniform particle size, and thus non-uniform release.

2

The desirability of controlled release of pesticides relates to many practical considerations in the field. Controlled release at the proper dose level can reduce the total amount of pesticide applied into the environment. Contemporary spray applications often apply ten or more times as much material as is actually needed for control, in an attempt to sustain the required control level through a period of time. That is to say that an application of four pounds per acre may be needed to give two weeks control, when only one-tenth of a pound per acre would be needed to give control if all the material was released to the target.

Controlled release can sustain an effective level of active ingredient in the environment for a much longer period of time, making multiple applications unnecessary, and still sustaining more effective control of the target organism.

For example, in the case of insects, it is often easier to control immature forms with lower levels of insecticide than are required to control adult forms of the same insect. Also, in the case of weed control it is known that young seedling plants are more easily controlled, and thus require lower levels of herbicides than older or mature plants. In many situations, weeds become completely non-susceptible to an active ingredient after they have reached the 4, 5, or 6 leaf stage, but are highly susceptible in the 1 to 4 leaf stage. Controlled release in this situation can be highly desirable, since weed germination can occur over an extended period of time. If the herbicide is not in the environment over this whole time of extended germination, multiple applications are necessary to obtain weed control.

It is known that the application of large amounts of active ingredient can have detrimental effects on the plant to be protected. Controlled release can allow placement in the root zone, for extended safe control of relatively large amounts of active ingredient, amounts that would otherwise be toxic to the host. An example is the use of an insecticide placed in the root zone of a seedling tree at the time of reforestation planting. Insect control over periods exceeding one year, and often approaching five years, are desirable. However, oftentimes it is not possible to place sufficient active ingredient close enough to the plant to allow it to be protected for the required period of time without causing the plant to die from toxicity side effects. Controlled release can correct this situation.

With some materials it is not even possible in a single application of uncontrolled release to apply a sufficient amount of material to give extended control, because the compound is so toxic to the plant being protected. An example is the use of carbofuran in the root system of some plants. Heretofore, carbofuran could not be safely applied at levels sufficient to give season-long insect control. Thus, when large amounts of carbofuran were applied as a single treatment, peach trees picked up toxic amounts of carbofuran with each irrigation, resulting in defoliation of the peach trees following each irrigation. By coating carbofuran granules according to the present invention, the release of active ingredient into the environment is controlled, so that larger amounts of material can be applied in a single application and still avoid host toxicity.

Increased productivity in agriculture is always sought. Controlled release technology can allow placement of large amounts of active ingredient in the target site, and thus reduce the number of applications required to sustain control. At the same time it is possible to tolerate more flexibility in the cultural operation than might be possible with current typical application practices. For an example, in flood rice culture, weed control applications are typically made 10 to 17 days after the rice seed has been sown into the water, as by airplanes. The timing is quite critical in order to achieve simultaneous tolerance by the rice crop and susceptibility of the weed species to be controlled. Application of controlled-release material prior to flooding can result in more complete weed control and greater flexibility in cultural practices, and still avoid most of the crop toxicity.

In areas of high rainfall, or in conditions where water exists in large quantities, such as in irrigation ditches, lakes, flood culture of rice, irrigated pastures, and gutters filled with intermittent water flow, controlled release of active ingredient is highly desirable. Typical pesticide applications have heretofore released all or excessively large amounts of the active ingredient into the water environment upon the first exposure. To have a controlled-release outflow matched to the active ingredient demand of the target site, but independent of the amount of water (when in large excess), or more commonly the leaching capability, is highly desirable. Some materials are available today as erodable slow-release formulations, but these depend upon a significant amount of water in order to sustain the erosion process and thus to release needed amounts of active ingredient to sustain control of the target. In times of intermittent water flow, these materials may cease to function, and when excess water is present, release too much.

In certain situations it would be desirable to combine several active ingredients in the same granule. This combination may be of two different herbicide types—one to control grasses, the other to control broadleaves; or a herbicide and an insecticide may be combined, or a combination of several different herbicides and insecticides may be desirable. Obviously a fungicide, bacteriacide, nematocide, or perhaps a growth regulator, may also be desirable to combine in various combinations with the above.

Using the same example as above, flooded rice, it is known that weed control in the early part of the cropping cycle is essential to high yield. It is also known that early insect control is essential to high yield in those fields where insect infestation occurs. Combination of an insecticide and herbicide to effect control of the two different targets would be highly desirable, since it would reduce multiple application of two different materials, be more timely in their placement into the field, and reduce the chance of weather or scheduling difficulties to interfere with one or both applications. From the standpoint of worker exposure, combination of these applications could effectively reduce the amount of exposure to one-half that obtained with two applications.

Nothing in this body of prior art related to macroencapsulation has suggested that relatively insoluble organic materials could be incorporated into controlled release formulations in a meaningful way.

Most organic products such as pesticides are presently unavailable in controlled-release form, either because they are apparently attacked by or react with the coating, or are destroyed by heat during the coating process, or because the coating does not control volatilization or escape of the pesticide before the desired time or under the desired conditions. Coatings which have been found effective in controlling the release of inorganic fertilizers, which are generally water-soluble and highly ionic, would not necessarily be expected to provide a similar benefit for those organic pesticides which are insoluble or barely soluble in water or even those which are soluble but only slightly ionic.

Encapsulation when practised with many polymeric substances requires temperatures that are destructive to the organic molecules constituting the active ingredient of the pesticide, so that the resulting product could not be used commercially in agriculture. Some polymeric substances which have been used on fertilizers and other plant nutrients that tolerate high coating temperatures cannot be used on the principal pesticides, which are much less tolerant of high temperatures.

Furthermore, the achievement of a uniform coating thickness has been difficult when using prior-art coating procedures.

US—A—3,771,994 describes the use of potassium azide in combination with another pesticide. The two pesticides may be incorporated in granules of, for example, attapulgite clay, corn cobs, vermiculite, natural manures, woodflour, sawdust, shavings or plant stems, stalks or leaves, the granules preferably being coated with a semi-permeable film or shell which allows only slow vaporization of the (other) pesticide from the granule. The semi-permeable film may, for example, comprise a polymerized drying oil such as linseed oil, soybean oil, safflower oil, castor oil, tung oil or a fish oil.

Objects of the invention

One object of this invention is to overcome the problems stated above and to provide a process for the preparation of coated granules having a controlled rate-of-release capability.

Another object of this invention is to provide a product exhibiting controlled release of pesticides which is effective over an extended period of time, when applied in agriculture on watered land or in hydroponic systems, ditches, swamps, aquariums, gutters, drains, canals, water purification systems, or the like.

Another object of the invention is to provide a resin-coated controlled-release product which is effective at higher than normal field temperatures, for instance, for use in rice paddies in sub-tropical or tropical climates.

A further object of the invention is to provide a coated, controlled-release pesticide product which protects the active ingredient from loss by chemical, or microbial attack, or by leaching, or by premature volatilization or volatilization over the desired period of use.

Among the advantages of this invention, it is now possible to enable higher amounts to be applied at one time than is possible with present commercial pesticides.

Another advantage is that it enables more efficient utilization of the active ingredient near to growing plants, whereas without benefit of this invention such close proximity would cause injury or death of the plant.

Another object of the invention is to provide an advantageous method of making the product of this invention.

Another object of this invention is to enable broad choice of release times from very short to very long time periods based on the properties of and the cooperation between the pesticide or active ingredient and the core or the coating.

A still further object of the invention is to provide new methods of pest control and of protection of agricultural crops and the like.

Summary of the invention

This invention concerns a controlled-release pesticide composition in the form of discrete particles such as granules, prills, or the like which are each coated with a hydratable membrane, formed *in situ*. In such granules, the solid core substance comprises the pesticide itself or the pesticide in combination with associated adsorbents or absorbents or other materials, such core then being coated with at least one layer of a particular type of membrane—an adduct of a diene and a lipid which provides a fatty acid radical having multiple double bonds (or a multiply unsaturated fatty acid radical). The diene and fatty acid radicals are present in approximately stoichiometric proportions but some excess of either component is satisfactory. The fatty acid component has sufficient unsaturation to form an adduct with the diene and to cure by reaction with oxygen, e.g., the fatty acid component may be linoleic acid, linolenic acid, eleostearic acid, licanic acid, arachidonic acid, or clupanodonic acid, or mixtures of them with each other.

The diene can be, for example, dicyclopentadiene, furan, methyl dicyclopentadiene, styrene, α-methyl styrene, liquid polybutadiene, or butadiene, or mixtures of these with each other as desired. The examples below, in general, employ dicyclopentadiene which provides especially satisfactory results, but other dienes can be used.

The lipid employed herein can be, for example, linseed oil, tung oil, maleinized soybean oil, fish oil, dehydrated castor oil, oiticica oil, or other such oil having sufficient unsaturation as described herein. Also, there can be employed, instead of or with glycerides, compounds of suitable fatty acids with pentaerythritol, sorbitol, trimethylol propane, trimethylol ethane, inositol, or 2,2,6,6, tetra methylol-cyclohexanol. For purposes of this invention these latter compounds are all considered lipids or fatty-acid-component-providing compounds.

The base core of the composite particle can be, as noted elsewhere herein, fertilizer or the pesticide itself, or can be suitably sized attapulgite, ground corn cobs, quartz sand, vermiculite, or kaolin. We have found that, in this invention, attapulgite cores are especially advantageous in that they promote liberation of pesticide to ensure substantially complete utilization of the amount provided in the granules made according to this invention.

A small amount of catalyst, such as a salt of cobalt, iron, lead, zinc, calcium, zirconium, or manganese, as the naphthenate, neodecanoate, octoate, tallate, stearate, or any mixture of such salts with each other, is suitably added to the resin.

A composition in the form of prills, granules or the like, made according to this invention and containing a pesticide, e.g., an herbicide such as molinate or other thiocarbamate, or a carbamate insecticide such as carbofuran, or organophosphorus insecticidal compounds such as malathion, exhibits the desired characteristics described above. A pesticide is present in the composition in an amount of active ingredient to provide the desired length of control of the pests to be attacked as the pesticide or other active ingredient is released into the area to be treated. It is generally desired to kill at least 95% of the infestation whether it be weeds, insects, fungi, bacteria, and in the case of a plant regulator, to cause sufficient effect as to be considered commercially acceptable. The term "plant regulator" is defined in the Federal Insecticide, Fungicide, and Rodenticide Act as Amended, Public Law 92—516, Oct. 12, 1972, as amended by Public Law 94—140, Nov. 28, 1975 at page 5, as any substance for accelerating or retarding, through physiological action, the growth or maturation rate of plants, but not including plant nutrients, trace elements or the like. The pesticide may be a substance which is slowly soluble or substantially insoluble in water.

Advantageously, the carbofuran composition suitably contains from about 0.06% to about 60% by weight pesticide based on the weight of the core. More carbofuran can be added if desired but it is generally not required. For molinate about 10% by weight of the core is a typical value. For malathion, a typical value is 1% to 20% by weight of the core. More than one of the pesticides or active ingredients can be incorporated in the prills, granules, etc., if they are compatible with each other. In manufacture the ingredient is suitably applied in admixture with the other core material or sequentially as separate applications over the core material. It may be incorporated as a crystalline product, a powdered technical or formulated composition, or suspended or dissolved in an organic solvent, such as acetone, mineral spirits, or other solvent volatilizable under ths conditions of manufacture.

The adduct or resin when used in accordance with this invention provides a coating, that is, a membrane-like coating which is somewhat water and air permeable, which controls release of the active ingredient in the particles when in contact with water or air and also controls such release so as to provide extended effectiveness of the pesticide even under conditions of higher ambient temperatures. One excellent adduct useful herein is essentially a copolymer, or Diels-Alder adduct, of dicyclopentadiene and about a stoichiometric amount of unsaturated fatty triglyceride. Such copolymer can comprise 30 to 45% dicyclopentadiene and 70 to 55% of the esterification product of glycerin and unsaturated fatty acids, which ester maintains sufficient unsaturation to cure by oxygen conversion. It will be understood that a chemically modified ester of such kind can be used so long as sufficient unsaturation is present. An advantageous coating is a polymer of a Diels-Alder adduct of 38% by weight dicyclopentadiene and 62% by weight linseed oil, or 62% by weight maleinized soybean oil or a mixture of linseed oil and non-maleinized soybean oil in any desired proportions. In such adduct, the amounts of linseed oil are for best results about 62% and maleinized soybean oil about 62%; or when a mixture of both is used, such mixture includes a range of 60% to 100% linseed oil and 40% to 0% soybean oil. That is, the linseed portion may be increased to 100%, while decreasing the soya portion to zero. These percentages are by weight. Other useful unsaturated glycerides are, for exmaple, maleinized tall oil, fish oil, safflower oil, sunflower oil, walnut oil, and mixtures of unsaturated fatty or glyceride oils with each other.

The core particles are of sizes generally used as prills or granules and are preferably substantially uniform in size. For instance, particles passing 8 mesh (2,38 mm) and retained on 16 mesh (1.0 mm) have been found to be satisfactory but other sizes, larger and smaller, can be used, if desired.

The coating may be applied in one or two or more successive layers. It may be applied by spraying, drizzling, or slowly pouring a solution thereof in a volatilizable organic solvent over a tumbling mass of granules to provide an initial layer or other methods known in the art. For plural layers this may be followed by drying and curing this layer and then repeating the steps of application and drying and curing until the desired number of layers and the total amount of coating have been applied. If desired, a continuous flow of appropriate coating can be applied over a tumbling mass of granules to provide a continuous single layer covering each granule until the desired total amount of coating has been applied and then drying and curing the total. For ease and speed of getting a uniform coating to provide for a minimum of loss of active ingredient when in contact with water or open to air, it is generally advantageous to apply in multiple layers. Suitably, the coating solution can contain from 20% to 80% by weight of solids or non-volatiles (n.v.). The amount of coating added in multiple layer preparations can vary from layer to layer.

The above operations may be carried out in a rotating device, so that the particles, prills or granules rotate and tumble over themselves as the various solutions are drizzled or poured over them. Drying is best effected by a current of air, which can be heated, flowing over the tumbling mass. The copolymer coating is suitably applied in increments of 1/2% to 2% by weight of the core, drying and curing between successive applications. Alternatively, it can be applied as a single coating of the desired amount.

In agricultural use the granules can generally be scattered in the seed furrow, drilled or broadcast onto the growing plots that have been seeded, or they can be scattered into watery areas to control pest infestations therein.

It may be desirable to free from a controlled-release application, a relatively small amount of the active material in order to obtain quick control of only a short duration; the remaining material may need protection from untimely release, such as might occur from intermittent rainfall or co-distillation (volatilization of active ingredient from soil surface along with water evaporating from the soil surface—a phenomena often associated with thiocarbamate herbicides) so that the active ingredient is present when needed. In this situation, only a low level of active ingredient in the granules would be needed, since only short term control would be required.

At the other end of the longevity spectrum, controlled long-term release either as a steady outflow or as an intermittent outflow would require significantly increased levels of active ingredient. In this instance, an amount that would normally constitute a phytotoxic level may be required for extended control. A protective coating can maintain a large proportion of the active ingredient from contact with the plant, so that release would not occur at the phytotoxic level, but the controlled release of the active ingredient associated with the coating would control the insects. In this application as much as 50% active ingredient may be applicable, while in the previous example, levels as low as 1/4 of 1% may be applicable.

In addition, nothing in this body of prior art has suggested that the internal core plays a significant role in controlling the release. We have found that not only does the size of the internal core play a role in controlling release, but also that the material used for the internal core influences the release characteristics. We have found that the use of small core sizes promotes more rapid outflow, and also, unexpectedly, promotes more complete outflow than do larger particles.

Selection of the internal core, according to this invention, can vary the rate of release of the active ingredient. The porosity and the ability of the core to collapse also helps to vary the release characteristics.

In another variation of this invention, a composite discrete particle, such as a prill or granule or the like, is made by employing a resin-coated fertilizer particle as a central portion of the core, applying pesticide having an active ingredient, such as carbofuran, molinate, or malathion, thereover to complete the core, and then applying from about 2% to about 30% by weight of the core of coating according to this invention thereover, with appropriate drying and curing. The discrete particle product can thus be a controlled-release composition containing both controlled-release fertilizer and controlled-release pesticide which can, if desired, have different release rates (depending at least in part on the amount and kind of coating on the starting core).

## Description of the drawings

Fig. 1 is a graph illustrating and comparing the water release characteristics of carbofuran in uncoated prills and prills coated according to this invention.

Fig. 2 is a graph comparing the release characteristics of molinate prills, both uncoated and with various amounts of coatings of this invention deposited from a 50% non-volatile solution. Fig. 2 also shows the residual amounts of molinate at the conclusion of the test.

Fig. 3 is a similar graph with the coatings of this invention deposited from a 30% non-volatile solution.

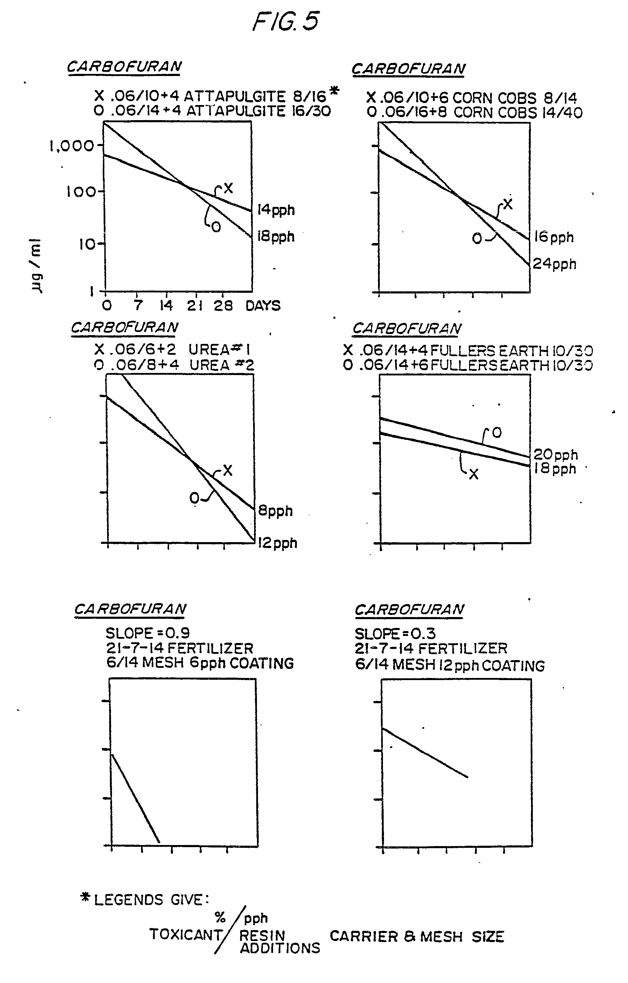

Fig. 4 is a graph comparing the release characteristics of uncoated malathion prills with those of malathion prills coated according to this invention.

Fig. 5 is a compilation of graphs showing different release rates of carbofuran, depending on the core material, from coated carbofuran prills of this invention.

Fig. 6 is another compilation of graphs showing various release rates for different pesticides from like-coated prills of this invention on various cores.

## Detailed description of the invention

The product of this invention is a discrete particle, granule, prill or the like comprising a solid core, an effective amount of a pesticide, and a hydratable membrane coating.

The pesticide may be, for example, 2,3-dihydro-2,2-dimethyl-7-benzofuranyl methylcarbamate, known in commence as carbofuran (also sold under the registered trademark Furadan), or an organophosphorus pesticide, such as 0,0-dimethyl 5-(1,2 dicarbethoxyethyl) phosphorodithioate, known in commerce as malathion, or a thiocarbamate pesticide such as S-ethyl hexahydro-1H-azepine-1-carbothioate, known in commerce as molinate (solid in commerce under the trademark Ordram). Other pesticides are useful, as shown below.

6

# 0 079 668

The coating is advantageously a cured Diels-Alder adduct of 30 to 45% dicyclopentadiene and 70 to 55% esterification product (triglyceride) of glycerine and unsaturated fatty acid.

The coating or coatings can be present in a total amount of from about 2% to 30% or somewhat higher, based on the weight of the starting core, whether granule, prill, or other particle. The coating solution is preferably added in increments or in a slow continuous addition in order to avoid the formation of bubbles in the coating, and to provide a uniform layer of coating over the entire granule with good retention of the active ingredient or ingredients.

The amount of pesticide employed is that which is effective, over the time span contemplated, to control the pest, such as weeds and insects, likely to infest the plants or watery areas to which the pesticide is applied, or to modify the normal patterns of crops or pests with a growth resulting or habit modifying chemical.

Other features and advantages of this invention are described elsewhere herein.

In one advantageous embodiment, there are provided discrete particles comprising carbamate-containing pesticide applied over a core material and the whole coated, or enrobed, with a cured Diels-Alder adduct of dicyclopentadiene and linseed oil containing 38% dicyclopentadiene and 62% of such oil with appropriate catalysts added.

The coating can alternatively be essentially such an adduct of 38% dicyclopentadiene and 62% maleinized soybean oil. Mixtures of such oils with each other can be employed, if desired.

We have found that when carbofuran pesticide is coated according to this invention with such adduct of dicyclopentadiene and linseed oil, there is a substantial improvement in the amount of the toxicant available in the later stages of slow release over the amount of toxicant available where the same pesticide is applied in an uncoated form, typically being bonded to an inner core by a binder (for instance, in the heretofore standard commercial product, where a gelled carbofuran formulation coats, or enrobes, a sand core particle as in the carbofuran product known as Furadan 10G (10% active ingredient, granular form) made and sold by FMC Corporation).

We have also found that the slow release of an organophosphorus insecticide, such as malathion, can be provided with substantially extended useful life when in contact with water, by coating granules, etc., containing such insecticide with an adduct or resin according to this invention.

Granules containing thiocarbamate pesticide such as the herbicide molinate (also sold under the registered trademark Ordram), are also provided according to this invention and exhibit very good controlled release characterstics.

The following detailed description and examples will illustrate more clearly the invention and the manner of carrying it out.

Example 1

Batches of coated granules were made according to this invention. In each batch, 25 g of 21-7-14 fertilizer prills were placed in a beaker to which 0.015 gram of carbofuran (as 75% dust base) was added in acetone solution, while the cup or beaker was rotated at 5—8 r.p.m. with ambient air blown over it to evaporate the solvent. When dry, the cup was removed from the rotating shaft and adduct was added (60% n.v. with appropriate catalysts added) to give a 4% resin coat in some batches and 6% resin coat in others. The resin was, as described above, a copolymer, or an adduct, of 38% dicyclopentadiene and 62% linseed oil. The beaker was replaced on the rotating shaft and the mass slowly tumbled with heated air obtained from a rheostat-controlled heated air blower. The tumbling mass temperature (bed temperature) was raised to 71°C (160°F), and maintained until the rotating mass was characterized by free flowing, non-tacky prills. At this point surface curing was complete, and the temperature was brought down to ambient and tumbling stopped.

Table 1 sets forth the characteristics of a number of prill batches made according to this invention wherein carbofuran is applied onto 21-7-14 fertilizer core. Where acetone is the solvent, a small amount of solvent relative to the fertilizer core weight, e.g., 2 mls. of solvent per 50 g of prills, usually resulted in a better coating, but, where ethanol is employed, a large relative amount of this solvent is satisfactory. The amount of solvent employed, therefore, is suitably that which suffices to distribute the active ingredient over the core. For instance, where a small amount of active ingredient is applied, or smell cores are employed, a large volume of solvent provides better distribution. At least about 6% resin coating is advantageous. Use of ethanol in place of acetone is also acceptable, except that the alcohol required more time to evaporate than the acetone.

In this example, Table 1 shows some batches, prepared from carbofuran as above, later tested for slow release of toxicant (active ingredient) when placed in water, or other tests.

7

### TABLE 1

| Sample batch No. | % Active ingredient | Ml. Solvent per grams fertilizer core | Adduct, pph coat | Solvent |
|---|---|---|---|---|
| 1 | 0.06 | 10/25 | 4 | Acetone |
| 2 | 0.06 | 10/25 | 4 | Acetone |
| 3 | 0.06 | 20/50 | 4 | Ethanol |
| 4 | 0.06 | 2/50 | 6 | Acetone |
| 5 | 0.06 | 2/50 | 6 | Acetone |
| 6 | 0.6 | 2/50 | 6 | Acetone |

Results of water soak studies on the above batches of prills to characterize the extended controlled release of carbofuran are shown in Table 2. In this study 1 g of prill preparations made as described above and comprising 21-7-14 fertilizer cores coated with 0.06% by weight carbofuran and 4% resin as described in numbers 1, 2, and 3 were compared with 0.1 g Furadan 10G (10% active ingredient granular) and with Furadan 75DB (75% carbofuran in a "dust base"; i.e., in a finely powdered clay) coated onto 21-7-14 fertilizer cores as above, but without any resin coating. Four 1 g samples (except the Furadan 10G, of which there were four 0.1 g samples) were placed separately into 100 ml beakers, each containing 20 ml water. After 15 min., 1 hr., 5 hrs., 18 hrs. and, for two samples of Furadan 10G, 40+hrs., the amount of carbofuran in the water was determined by nitrogen detection gas chromatography.

### TABLE 2
Summary of results obtained from a slow release study of carbofuran (water solubility 700 ppm)

| Sample batch number | Carbofuran found in soak water at indicated time | | | | |
|---|---|---|---|---|---|
| | 15 Min. | 1 Hr. | 5 Hrs. | 18 Hrs. | 40 Hrs+ |
| 1 Coated Carbofuran | | | | | |
| Micrograms | 50.0 | 70.0 | 150.0 | 230.0 | — |
| % of total in prill | 12.0 | 17.0 | 37.0 | 56.0 | |
| 2 Coated Carbofuran | | | | | |
| Micrograms | 30.0 | 30.0 | 110.0 | 150.0 | — |
| % of total in prill | 10.3 | 10.3 | 38.0 | 52.0 | |
| 3 Coated Carbofuran | | | | | |
| Micrograms | 10.0 | 20.0 | 110.0 | 100.0 | — |
| % of total in prill | 2.0 | 4.0 | 22.0 | 20.0 | |
| Furadan 10G, no coating | | | | | |
| Micrograms | 1400.0 | 940.0 | 2000.0 | 2800.0 | 2900.0 |
| % of total in prill | 14.0 | 9.4 | 20.0 | 28.0 | 29.0 |
| Furadan 75DB on ferti-lizer, no coating | | | | | |
| Micrograms | 600.0 | 10.0 | 30.0 | — | — |
| % of total in prill | substantially all | Trace | Trace | | |

It can be seen that significant amounts of toxicant were still being released from all of the resin-coated preparations, while the similarly prepared but non-resin coated Furadan granules released substantially the total load of active ingredient within the first 15 minutes, with only trace amounts present at later sample times (Table 2). The commercial non-coated Furadan 10G product released relatively uniform amounts after 5 hours, an expected result from the large initial amount of active ingredient. The surprising result was that of controlled release from such a small amount (0.06% carbofuran) in the coated prills.

Example 2
Multiple coating of carbofuran pesticide on central core of fertilizer
Batches were prepared in some of which an amount of 21-7-14 fertilizer prills were mixed with 0.06% of their weight of carbofuran dissolved in the equivalent of 20 mls of acetone solution per 50 g of fertilizer while the cup coater was rotated at 5 to 8 r.p.m. with ambient air blown over it to evaporate the solvent. In others of this series, 0.6% carbofuran was added with solvent in the ratio of 2 ml per 50 g of such fertilizer core, all as shown in Table 3 below. When the prills were air dry, the coater was removed from the rotating shaft and resin (65% non-volatiles with appropriate catalysts) was added to give a 2% (by weight of the core) resin coating. The coater was replaced on the rotating shaft and the mass slowly tumbled until all of the prills were coated with resin. No heat was applied during this process. When the prills were completely coated, the coater was removed from the rotating shaft, and 4% resin was added in a second addition or in one test 10% resin was added. The coater was replaced on the rotating shaft and the mass slowly tumbled with heated air. The tumbling mass temperature (bed temperature) was raised to 71°C (160°F). and maintained until the rotating mass was characterized by free flowing, non-tacky prills. Other batches of prills were made in the same manner, except that 0.6% carbofuran was incorporated, and only 2 mls solvent was used per 50 g core weight, and the amounts of coating resin were changed as set out in Table 3, the sample batch numbers being there identified. Acetone was the solvent used, and the coating resin was a copolymer of 38% dicyclopentadiene and 62% linseed oil.

In the case of sample batch number 13 commercially obtained 10% carbofuran granules were used as the coating substrate. For this preparation 50 g of the 10% carbofuran granules were used and the resin for coating was added directly to the cup coater without the solvent addition step. In all other ways the prill preparation was the same as previously described, except at the very end of the process finely divided attapulgite powder was used in a small amount to remove the tackiness of the granules. At this point, surface curing for all samples was complete and the temperature was brought down to ambient and tumbling was stopped.

TABLE 3

Summary of coating tests using carbofuran coated onto 21-7-14 fertilizer (except Sample Batch #13 which was granular 10% carbofuran commercial pesticide)

| Sample batch No. | % Active ingredient | Ml. Solvent used per amount prills in grams | Resin, p.p.h. coating | |
|---|---|---|---|---|
| | | | 1st layer | 2nd layer |
| 7 | 0.06 | 20/50 | 2 | 4 |
| 8 | 0.06 | 20/50 | 2 | 10 |
| 9 | 0.6 | 2/50 | 2 | 4 |
| 10 | 0.6 | 2/50 | 2 | 10 |
| 11 | 0.6 | 2/50 | 2 | 10 |
| 12 | 0.6 | 2/50 | 2 | 10 |
| 13 | 10.0 | 0/10 | 2 | 10 |

In both Example 1 and Example 2 the resin used was either a copolymer of 38% dicyclopentadiene and 62% linseed oil or 62% of a maleinized soybean oil or an admixture of soybean oil and linseed oil in a ratio of approximately 40 to 60. There can be employed, if desired, any vegetable oil or triglyceride-ester or -esters of any combination or mixture of unsaturated fatty acids wherein such esters have sufficient unsaturation to react with dicyclopentadiene and dry via oxidation. There are added also 1/2% lead naphthenate, lead octoate or like driers that give similar drying response. A very useful catalyst (or dryer) for this purpose contains 0.54% lead and 0.27% manganese as supplied by any commercial metallic paint drier and accelerates the curing of the adduct.

All percentages are by weight based on 100% polymer solids, and the resin is made up with mineral spirits, to 65% solids in this instance.

Water soak data collected as described below, showed significant and surprising variations in the amount of controlled release obtained from different levels and methods of resin and prill coating thereof. Data presented in Table 4 below show the accumulative percentage of carbofuran released from the various coated prills into water (1 g of coated prills/20 mls water), the water being completely changed at the indicated sampling times, i.e. 1 g of prills were weighed into a 100 ml plastic beaker to which 20 mls of water were added, the water being decanted off and saved for chemical analysis, and replaced by new water which was removed, saved and itself replaced at the next sample time, and so on. The amount of carbofuran was measured by gas chromatography. The accumulative percent release was calculated from the chemically analyzed initial amount in the coated prills.

# 0 079 668

## TABLE 4

Release characteristics of carbofuran in test prills showing parts per hundred of resin and cumulative percentage release

| Samping time | Sample batch number | | | | | | | |
|---|---|---|---|---|---|---|---|---|
| | 3 4 pph | 4 6 pph | 5 6 pph | 7 4 pph | 8 10 pph | 14 4 pph | 15 8 pph | 16 12 pph |
| | Initial amount of carbofuran (µg) | | | | | | | |
| 0 | 260 | 260 | 389 | 331 | 364 | 529 | 511 | 483 |
| | Percent released by indicated time | | | | | | | |
| 1H | 11.3 | 2.0 | 0.5 | 6.0 | 5.1 | 11.6 | 1.0 | 0.5 |
| 24H | 34.3 | 10.0 | 2.4 | 19.3 | 13.9 | 34.4 | 4.4 | 1.9 |
| 48H | 44.8 | 17.2 | 3.9 | 27.4 | 19.4 | 46.7 | 7.2 | 3.0 |
| 1W | 60.5 | 27.5 | 6.8 | 37.3 | 29.7 | 66.5 | 13.6 | 6.6 |
| 2W | 68.5 | 32.3 | 8.7 | 41.7 | 37.9 | 79.0 | 16.7 | 9.7 |
| 4W | 72.6 | 35.2 | 9.7 | 43.3 | 40.9 | 84.4 | 21.8 | 11.0 |
| 5W | 75.9 | 37.2 | 10.8 | 44.5 | 45.4 | 87.7 | 25.2 | 12.6 |

H: Hours
W: Weeks
Prills of sample batches 3, 4, 5, 7, and 8 were made on the cup coater; prills of sample batches 14—16 were made on a pilot coater.

Study was terminated after five weeks, even though many coated prills had less than 50% of their active ingredient exhausted. (Prills 14—16 are further discussed below in Example 3).

Data in Table 5 below show the results of an extended controlled release study in which the same granule preparations as described in Examples 1 and 2 were evaluated for extended controlled release, and comparison was made with a non-coated commercial 10% granular carbofuran formulation. The study was as described above for Example 2, Table 4, except for sample batch #13 (see Table 3) and the commercial formulation, which were present as 0.5 g/20 mls, all other conditions being the same.

TABLE 5
Assessment of extended controlled release of carbofuran in water soak studies.
Successive release in micrograms

| Sampling time | PPH level and sample batch number | | | | | | |
|---|---|---|---|---|---|---|---|
| | 6 pph 4 | 6 pph 6 | 12 pph 8 | 6 pph 9 | 12 pph 10 | 12 pph 13 | Commercial 10G |
| | (initial amount carbofuran ($\mu$g)) | | | | | | |
| | 250.5 | 9037 | 364.4 | 9568 | 7483 | 46,264 | 61,411 |
| 1H | 11.0 | 688 | 28.6 | 385 | 3.3 | 93.5 | 2255 |
| 23H | 25.3 | 660 | 31.4 | 220 | 13.8 | 605 | 4345 |
| 48H | 24.8 | 313 | 181.5 | 145 | 12.1 | 479 | 4845 |
| 1W | 40.0 | 460 | 35.0 | 490 | 56.0 | 1290 | 4600 |
| 2W | 26.0 | 240 | 19.0 | 360 | 51.0 | 1350 | 5100 |
| 3W | 12.0 | 205 | 11.0 | 670 | 47.0 | 1160 | 4400 |
| 4W | 10.0 | 105 | 6.0 | 380 | 31.0 | 830 | 5000 |
| 5W | 7.0 | 92 | 10.0 | 370 | 57.0 | 1090 | 4100 |
| 6W | 8.0 | 131 | 15.0 | 370 | 75.0 | 990 | 5300 |
| 7W | 8.0 | 104 | 12.0 | 460 | 125.0 | 990 | 6200 |
| 8W | 2.0 | 95 | 13.0 | 300 | 63.0 | 1800 | 4700 |
| 9W | 3.0 | 74 | 14.0 | 320 | 107.0 | 980 | 4200 |
| 10W | 2.0 | 102 | 17.0 | 290 | 139.0 | 1010 | 4800 |
| 11W | 5.0 | 80 | 6.0 | 200 | 137.0 | 1240 | 2150 |
| 12W | 2.0 | 72 | 3.0 | 198 | 65.0 | 880 | 443 |
| 13W | 3.0 | 81 | 9.0 | 146 | 49.0 | 630 | 18 |
| 14W | 2.0 | 60 | 4.0 | 79 | 51.0 | 690 | 1 |
| 15W | 1.0 | 46 | 5.0 | 76 | 61.0 | 650 | 0 |
| 16W | 2.0 | 53 | 3.0 | 113 | 110.0 | 630 | 2 |
| 17W | 3.0 | 63 | 2.0 | 100 | 48.0 | 640 | 2 |
| 18W | 3.0 | 48 | 3.0 | 129 | 227.0 | 610 | 1 |
| PRILL | 100.0 | 510 | 115.0 | 2050 | 4300.0 | — | 0 |

It is strikingly evident and surprising in the extreme that the level of controlled release is very high. Sample batch number 4 had only about 1% as much active ingredient as the commercial 10G granule, yet sustained release for the duration of the test. Coated prills having larger initial amounts sustained even greater outflows for the duration of the test.

A third comparative test between the commercial 10G product coated according to this invention (sample batch #17) and the non-coated commercial 10G product was conducted. The coating resin was a copolymer of dicyclopentadiene and linseed oil as described above. The prill contained 10% toxicant and was coated with 12 pph resin applied in two layers of 2 pph and 10 pph, respectively. The same soaking conditions as above were used, except that the water was changed approximately daily on one set of samples, and weekly on another. As shown in Table 6 below, the non-coated 10G formulation was nearly exhausted after 12 samplings, whether the samplings were made weekly or daily. The cumulative percentage release of the non-coated prills shows that 90% and 73% respectively of the active ingredient had passed into the water. By comparison, only 25% and 10% respectively of the active ingredient had passed into the water from the coated samples. These data show the surprising result that significant controlled release occurs with the coated preparation, and that relatively slight effects occur from increased exposure to an everchanging aqueous medium.

TABLE 6

Comparison of the release rate of coated (sample batch number 17) (+) and non-coated (−) commercial 10% granular carbofuran product, showing the average µg/20 ml water sampled weekly (W) or approximately daily, (D), and the cumulative percentage released during 12 samplings on a weekly (W) or daily (D) basis

| No. of samplings | Average µg/20 ml | | | | Cumulative % release | | | |
|---|---|---|---|---|---|---|---|---|
| | W | | D | | W | | D | |
| | + | − | + | − | + | − | + | − |
| 1 | 93.5 | 225 | 62 | 2070 | 0.2 | 3.7 | 0.1 | 4.1 |
| 2 | 605 | 4345 | 490 | 3000 | 1.5 | 10.8 | 1.2 | 10.1 |
| 3 | 479 | 4840 | 380 | 2600 | 2.5 | 18.7 | 2.0 | 15.3 |
| 4 | 1290 | 4600 | 440 | 2210 | 5.3 | 26.2 | 2.9 | 19.8 |
| 5 | 1350 | 5100 | 1,220 | 4200 | 8.2 | 34.5 | 5.5 | 28.2 |
| 6 | 1160 | 4400 | 330 | 4250 | 10.7 | 41.7 | 6.2 | 36.7 |
| 7 | 830 | 5000 | 305 | 4300 | 12.5 | 49.8 | 6.8 | 45.3 |
| 8 | 1090 | 4100 | 350 | 2400 | 14.9 | 56.5 | 7.6 | 50.1 |
| 9 | 990 | 5300 | 350 | 3400 | 18.7 | 65.0 | 8.3 | 56.9 |
| 10 | 990 | 6200 | 250 | 2900 | 19.2 | 75.1 | 8.9 | 62.7 |
| 11 | 1800 | 4700 | 290 | 2700 | 23.1 | 82.8 | 9.5 | 68.1 |
| 12 | 980 | 4200 | 340 | 2270 | 25.2 | 89.6 | 10.2 | 72.6 |

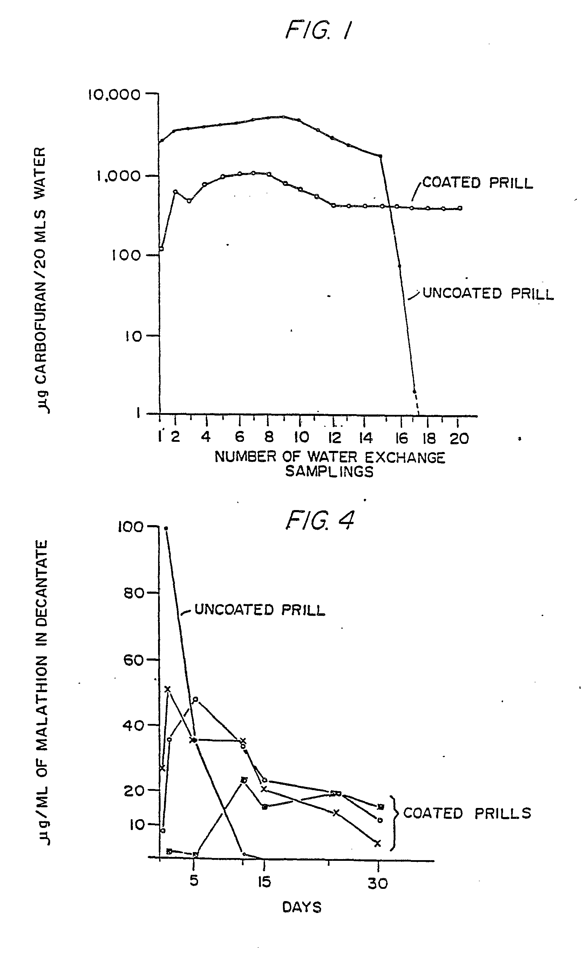

A striking illustration of basic differences is shown in Fig. 1, where the results of these water samplings or washings are typically shown. This Figure shows graphically the comparative results of water washings of uncoated carbofuran 10G sandcore granules with those obtained with carbofuran 10G sandcore granules which had been coated according to this invention (sample batch 18). In the coated prills in these tests, 46,000 micrograms carbofuran remained in the prills at the end of the tests, whereas the uncoated prills were exhausted prior to this time. This would be enough for about 90 more samplings or washings, based on an average of 500 µg released per sampling or washing. The results are approximately the same whether washings were one day or one week apart.

Example 3
Tests on fertilizer prills ·
25 kg (50 pounds) of 21-7-14 fertilizer prills were weighed into a coating device having a rotating drum with a means for flowing heated air onto and over a moving bed of granules. The required amount of carbofuran active ingredient, in the form of a 75% dust base manufacturing formulation, diluted into acetone (equivalent to 2 mls acetone per 50 g of 21-7-14 fertilizer), was slowly added to the rotating (rotation at 6 to 8 r.p.m.) moving bed of fertilizer granules. The material was air dried with non-heated air swept across the rotating fertilizer batch into an exhaust air duct. A weighed amount of 65% solids resin (as previously described above in Example 2) was slowly added into or onto the rotating batch to give a coating of 4 parts per hundred (pph). All of this was done before any heat was applied. When all prills were wet with resin, the temperature was slowly brought up to 68°C (155°F). and held there until the granules were cured. At this time a sample (about 0.5 kg or 1 lb) was withdrawn, and a second batch of the same

12

resin was added in the same way to bring the total amount of resin added (to the remaining prills) to 8 pph (4+4). This was done while the mass was rotating and heated. After the second curing, another aliquot of coated prills was withdrawn (about 0.5 kg or 1 lb). A third application of 4 pph was added as above (4+4+4=12 pph). This resulted in a granule sample batch No. 14 having a single resin coat of 4 pph, and a granule sample batch No. 15 having two successive resin coatings totaling 8 pph, and a granule sample batch No. 16 having three successive resin coatings totaling 12 pph.

These three coated prills were submitted to water soak removal testing as described above in Example 2, and data from these soaking studies are shown in Table 4 above. It can be seen that the level of controlled release is influenced by level of resin.

Example 4

Temperature response of resin-coated carbofuran-fertilizer prills

Previously prepared resin coated 21-7-14 fertilizer prills containing carbofuran were tested for response to temperature. The sample batches selected for this study were prepared according to Examples 2 and 3 above. The prills were put into water as previously described with all materials being placed in water at the rate of 1 gram/40 ml of water except the non-coated commercial 10% carbofuran granules which were at the rate of 0.5 gram/40 mls of water. Table 7 below tabulates data collected from this study and clearly shows that the resin coating protects the active ingredient. There was substantial loss of carbofuran, especially at higher temperatures, in the commercial non-coated product. The percentages given indicate carbofuran remaining in the prills plus that recovered in the soak water, in each instance.

TABLE 7

Summary of effects of different temperatures on the percent recovery of carbofuran enrobed onto 21-7-14 fertilizer with various resin levels, compared with non-coated 10% carbofuran granules

| Sample batch number | | 4 | 6 | 9 | 10 | 15 | 16 | Non-coated |
|---|---|---|---|---|---|---|---|---|
| pph resin | | 6 | 6 | 2+4 | 2+10 | 4+4 | 4+4+4 | 0 |
| µg active ingredient in prill/gr | | 606 | 4776 | 8383 | 9396 | 457 | 495 | 49.396 |
| Temp °F | °C | | | | | | | |
| 60 | 15,5 | 91.7 | 101.6 | 104.1 | 100.4 | 104.6 | 97.4 | 107.4 |
| 70 | 21 | 102.5 | 105.3 | 99.7 | 100.6 | 94.7 | 106.5 | 100.9 |
| 90 | 32 | 105.9 | 93.1 | 96.2 | 98.9 | 100.6 | 96.2 | 91.7 |
| 120 | 49 | 110.7 | 87.7 | 91.8 | 93.6 | 91.2 | 92.5 | 39.8 |
| 150 | 65,5 | 99.7 | 73.4 | 103.4 | 78.9 | 97.8 | 65.6 | 12.9 |

Data presented in Table 8 below show uniform outflow levels of active ingredient resulting from various coating and active ingredient levels at 15.5°, 21° and 32°C (60°, 70°, and 90°F). The non-coated commercial formulation showed little difference between 15.5° and 21° but more than a doubling of active ingredient outflow occurred between 21° and 32°. With the resin-coated granules, a significant outflow increase occurred between 32° and 49° (120°F). There was another doubling of outflow shown by the non-coated commercial granule between 32° and 49° at 1 hour and accelerated outflow at longer soak times, with substantial change at 49°. These data indicate the resin coated process more uniformly controls outflow than the commercial non-coated preparation. The prills were essentially exhausted before reaching the 49° and 65.5° (150°F) temperatures in the later stages.

A highly significant increase in active ingredient outflow occurred in all preparations exposed to 65.5°. Decomposition of active ingredient occurred at the 65.5° temperature after 24 hours and at 49° after 48 hours and longer with the commercial non-coated formulation. Though slight levels of decomposition were indicated with resin-coated granules, onset of such decomposition did not occur until after 48 hours and it was not proportionately as great as was observed in the non-resin-coated formulation.

13

TABLE 8

Response of coated 21-7-14 fertilizer and carbofuran granules, coated at different resin levels, to different temperatures, showing µg active ingredient/40 ml water after the indicated sample times. Water was completely changed at each sample time

| Sampling time | Temp. °C | Temp. °F | Sample batch No. | 4 | 6 | 9 | 10 | 15 | 16 | Non-coated |
|---|---|---|---|---|---|---|---|---|---|---|
| | | | Resin, pph | 6 | 6 | 2+4 | 2+10 | 4+4 | 4+4+4 | 0 |
| | | | Active ingredient/gr in µg | 606 | 4776 | 8383 | 9396 | 457 | 495 | 49,396 |
| 1H | 15.5 | 60 | | 12 | 180 | 56 | 22 | 0 | 0 | 1560 |
| | 21 | 70 | | 13 | 223 | 74 | 22 | 0 | 0 | 1850 |
| | 32 | 90 | | 26 | 270 | 49 | 28 | 5 | 2 | 4000 |
| | 49 | 120 | | 240 | 1110 | 300 | 230 | 26 | 13 | 9800 |
| | 65.5 | 150 | | 540 | 2900 | 6600 | 5600 | 230 | 121 | 6400 |
| 24H | 15.5 | 60 | | 114 | 460 | 120 | 33 | 5 | 2 | 3200 |
| | 21 | 70 | | 101 | 530 | 124 | 34 | 4 | 2 | 3600 |
| | 32 | 90 | | 202 | 830 | 202 | 144 | 27 | 4 | 6300 |
| | 49 | 120 | | 360 | 2400 | 2300 | 1640 | 135 | 84 | 9800 |
| | 65.5 | 150 | | 59 | 420 | 1840 | 1520 | 187 | 170 | 3 |
| 48H | 15.5 | 60 | | 94 | 560 | 179 | 37 | 6 | 1 | 2800 |
| | 21 | 70 | | 120 | 610 | 111 | 30 | 3 | 4 | 2800 |
| | 32 | 90 | | 141 | 850 | 170 | 58 | 17 | 25 | 6500 |
| | 49 | 120 | | 55 | 580 | 3600 | 3000 | 86 | 83 | 63 |
| | 65.5 | 150 | | 5 | 34 | 210 | 257 | 26 | 29 | 0 |
| 7D | 15.5 | 60 | | 119 | 930 | 460 | 147 | 13 | 8 | 5400 |
| | 21 | 70 | | 173 | 1090 | 330 | 129 | 6 | 3 | 5100 |
| | 32 | 90 | | 173 | 1010 | 500 | 196 | 20 | 10 | 6800 |
| | 49 | 120 | | 11 | 86 | 1880 | 2400 | 128 | 161 | 1 |
| | 65.5 | 150 | | 0 | 0 | 14 | 33 | 3 | 3 | 0 |

TABLE 8 (continued)

| Sampling time | °C | Temp °F | Sample batch No. | 4 | 6 | 9 | 10 | 15 | 16 | Non-coated |
|---|---|---|---|---|---|---|---|---|---|---|
| | | | Resin, pph | 6 | 6 | 2+4 | 2+10 | 4+4 | 4+4+4 | 0 |
| | | | Active ingredient/gr in µg | 606 | 4776 | 8383 | 9396 | 457 | 495 | 49,396 |
| 14D | 15.5 | 60 | | 34 | 440 | 480 | 136 | 13 | 5 | 5800 |
| | 21 | 70 | | 46 | 430 | 280 | 114 | 10 | 4 | 5800 |
| | 32 | 90 | | 52 | 470 | 430 | 163 | 18 | 16 | 6400 |
| | 49 | 120 | | 3 | 11 | 430 | 640 | 26 | 76 | 1 |
| | 65.5 | 150 | | 0 | 0 | 2 | 4 | 1 | 2 | 0 |
| 21D | 15.5 | 60 | | 26 | 153 | 268 | 118 | 10 | 3 | 6900 |
| | 21 | 70 | | 20 | 131 | 171 | 112 | 4 | 2 | 6600 |
| | 32 | 90 | | 19 | 230 | 300 | 140 | 17 | 9 | 7300 |
| | 49 | 120 | | 3 | 2 | 78 | 281 | 7 | 16 | 3 |
| | 65.5 | 150 | | 0 | 0 | 0 | 2 | 0 | 0 | 0 |
| 21D | 15.5 | 60 | | 18 | 128 | 260 | 145 | 11 | 3 | 6600 |
| | 21 | 70 | | 23 | 114 | 167 | 115 | 6 | 2 | 6100 |
| | 32 | 90 | | 13 | 189 | 420 | 166 | 22 | 10 | 6200 |
| 28D Prills | 15.5 | 60 | | 139 | 2000 | 6900 | 8800 | 420 | 440 | 20,800 |
| | 21 | 70 | | 125 | 1900 | 7100 | 8900 | 400 | 510 | 18,000 |
| | 32 | 90 | | 16 | 600 | 6000 | 8400 | 400 | 400 | 1,780 |

H=Hour
D=Day

Data in Table 7 and 8 show active ingredient protection from temperature-related degradation or volatilization. In addition, the release rates of the resin-coated preparations were substantially less affected by temperature over the range of 15.5° to 32°C (60° to 90°F). than the non-coated commercial formulation.

Example 5

Biological assessment of slow-release carbofuran-fertilizer granules as insecticide

Biological assessment of 21-7-14 fertilizer granules having carbofuran applied thereover with differing levels of this active ingredient, and with resin coating over all, were compared with coated and non-coated commercial granular 10% carbofuran pesticide. The resin was a copolymer of 38% dicyclopentadiene and 62% linseed oil. These formulations were compared with carbofuran impregnated 21-7-14 fertilizer prills that were non-coated and with coated fertilizer prills having no carbofuran.

Green peach aphid (*Myzus persicae*) was used as the primary bio-assay tool; however, cabbage looper (*Trichoplusia ni*) and the serpentine leafminer (*Liriomyza brassicae*) were also used.

This study was conducted using fluorescent lighting with sixteen eight-foot-long fluorescent tubes per four foot by sixteen foot table. The light period was 14 hours light and 10 hours dark. Five rows of ten 3.8 litre (one-gallon) cans were placed across the 1.2 m (four-foot) wide table with four rooted cuttings of chrysanthemums (Mandalay variety) planted into each one-gallon can containing Foster fine sandy loam soil. On the next day after planting and again nine days after such planting the various coated granules were placed 1.3 cm (1/2 inch) deep into the soil in the center of the pot to prevent their being washed out with watering. Each treatment was adjusted to give the equivalent of the indicated rate of active ingredient per unit area, and at the same time give an equal amount of fertilizer to all pots. The amount of fertilizer applied was the equivalent of 336 kg per hectare (300 pounds nitrogen per acre) as recommended for chrysanthemums. Active ingredient rates were applied from 1.3 to 21.5 kg per hectare (1.2 to 19.2 pounds per acre) in a geometric series. Treatments were randomly located on the growing tables with each treatment replicated three times.

The growth room was maintained at 15.5 to 27°C (60° to 80°F). for the duration of the test period with relative humidity approximately 70%. Initially, plants were watered once every 10 to 14 days. As the plants grew to a larger size the watering interval was shortened to 7 to 10 days, and then as needed. The plants under test were infested with aphids 10 days after the last toxicant applications, they were reinfested again 16 days later. A large number of aphid cows and young aphid nymphs were transferred by placing infested chrysanthemum leaves onto the plants to be infested. As the infested leaf dried, most of the aphids transferred to the plants to be infested. In order to assess the success of each transfer, a physical count was made within several days after each aphid transfer.

Aphids were counted at approximately 3 week intervals, by physically examining each leaf on all plants. Individuals were counted until 100 aphids were found at which time the count was terminated. On severely infested plants there may have been 1,000 or more aphids, but it was not consistent with time requirements or need to enumerate the large actual number of aphids.

Aphid control data are presented in Table 9 below and show there was a steady aphid population throughout the test period. A comparison between 21-7-14 fertilizer coated first with 0.2% carbofuran and then coated with a 2+10 ppH resin coating, was compared with a non-coated 21-7-14 fertilizer containing 0.2% carbofuran. On a rate for rate basis (active ingredient) these preparations were nearly equal. The non-resin-coated commercial carbofuran product was slightly more active than the resin coated preparation, however, all of the chrysanthemum plants would have died had non-coated fertilizer been applied. That is to say that non-resin coated ferilizer would have killed the plants within less than 3 days due to salt toxicity. These data clearly show that the use of resin withholds excessive salt levels from the plant as was previously known, but also it allows toxic amounts of carbofuran to flow from resin coated granules. The resin coated product is prill #18.

## TABLE 9
Biological assay of slow release granules showing aphid control resulting from treatment with different carbofuran—resin coating combination

| Sample batch No. Active ingr. conc./pph resin | Rate kg a.i./ hectare (lbs a.i./A) | | Average numbers of aphids at indicated days after first treatment with granules (4 plants×4 replicates) | | | | | | | | | | |
|---|---|---|---|---|---|---|---|---|---|---|---|---|---|
| | | | 20 | 31 | 39 | 50 | 59 | 70 | 82 | 89 | 96 | 103 | 110 | 117 |
| | .3 | (.3) | 3.7 | 3.0 | 9.3 | 8.0 | 44.7 | 85.0 | 93.3 | 100.0 | 100.0 | 100.0 | 100.0 | 100.0 |
| | .7 | (.6) | 5.7 | 0.0 | 4.7 | 4.3 | 21.7 | 55.0 | 90.0 | 100.0 | 100.0 | 100.0 | 100.0 | 100.0 |
| | 1.3 | (1.2) | 9.0 | 0.0 | 5.3 | 8.0 | 3.3 | 66.7 | 100.0 | 100.0 | 100.0 | 100.0 | 100.0 | 100.0 |
| 18 0.2/2+10 | 2.7 | (2.4) | 6.3 | 4.7 | 3.7 | 0.7 | 0.0 | 2.3 | 6.3 | 9.3 | 0.0 | 33.7 | 49.7 | 67.0 |
| | 5.4 | (4.8) | 5.0 | 0.0 | 0.0 | 0.0 | 0.0 | 5.0 | 0.0 | 0.0 | 3.0 | 6.0 | 8.0 | 9.0 |
| | 10.8 | (9.6) | 2.0 | 0.0 | 9.0 | 0.0 | 0.0 | 1.0 | 0.0 | 0.0 | 0.0 | 0.0 | 0.0 | 0.0 |
| | 21.5 | (19.2) | 2.0 | 0.0 | 2.0 | 0.0 | 0.0 | 0.0 | 0.0 | 0.0 | 0.0 | 0.0 | 0.0 | 2.0 |
| | .3 | (.3) | 5.3 | 1.3 | 13.3 | 9.0 | 41.3 | 83.7 | 100.0 | 91.7 | 100.0 | 100.0 | 100.0 | 100.0 |
| | .7 | (.6) | 9.3 | 2.3 | 6.0 | 5.3 | 16.0 | 60.0 | 86.7 | 100.0 | 100.0 | 100.0 | 100.0 | 100.0 |
| | 1.3 | (1.2) | 6.0 | 2.3 | 3.3 | 3.0 | 4.3 | 56.7 | 51.7 | 11.0 | 38.3 | 62.3 | 66.3 | 100.0 |
| non-coated 0.2/0 | 2.7 | (2.4) | 1.0 | 0.0 | 1.0 | 0.0 | 0.0 | 1.0 | 3.0 | 10.0 | 0.0 | 20.0 | 21.0 | 60.0 |
| | 5.4 | (4.8) | 0.0 | 0.0 | 0.0 | 0.0 | 0.0 | 1.0 | 0.0 | 0.0 | 1.0 | 3.0 | 10.0 | 12.0 |
| | 10.8 | (9.6) | 0.0 | 0.0 | 0.0 | 0.0 | 0.0 | 1.0 | 5.0 | 0.0 | 0.0 | 0.0 | 2.0 | 3.0 |
| | 21.5 | (19.2) | 0.0 | 0.0 | 0.0 | 0.0 | 0.0 | 0.0 | 0.0 | 0.0 | 0.0 | 0.0 | 0.0 | 0.0 |

In a second test group cabbage looper (*Trichoplusia ni*), eggs which had been oviposited onto paper towels were placed onto the chrysanthemum foliage. A square of the paper towel containing 10 or more eggs was placed onto each plant so that hatching worms infested the test plants. A second lot of eggs were placed onto prepared media and allowed to grow to the third instar stage. They were then individually placed onto test plants which had been treated with pesticides in amounts that were effective in controlling first instar larvae hatching from eggs placed on the plants. This was done to determine if larger worms were controlled at the same level of active ingredient as smaller larvae.

Data presented in Table 10 below for cabbage looper control show information similar to that seen above on green peach aphid in Table 9. Results obtained from coated and non-coated carbofuran-fertilizer preparations were similar for cabbage looper control. As the test proceeded, the worms matured into pupae, reducing the worm count in all treatments. An anomaly in the data occurs with the 10.8 kg active ingredient per hectare (9.6 lbs. active ingredient per acre) rate, but it is present in both the treated and untreated specimens for unexplainable reasons. As pointed out above with the green peach aphid, the combination of coated versus non-coated fertilizer depends upon the resin to allow sufficient fertilizer to be applied as a single dose since the absence of the resin would cause salt mortality to occur.

TABLE 10

Biological assay of slow release granules, showing cabbage looper (*Trichoplusia ni*) control resulting from treatments with different Carbofuran-resin coating combinations

| Sample batch No. Active ingr. conc./pph resin | Rate kg a.i./hectare (lbs. a.i./A) | Average number of worms at indicated times* (4 plants×4 replicates) | | | | |
|---|---|---|---|---|---|---|
| | | 73 | 80 | 87 | 94 | 101 |
| | .3  (.3) | 6.7 | 4.0 | 2.0 | 0.3 | 0.0 |
| | .7  (.6) | 5.7 | 3.7 | 3.3 | 1.3 | 0.3 |
| | 1.3  (1.2) | 3.3 | 3.0 | 4.3 | 0.3 | 0.0 |
| 18 0.2/2+10 | 2.7  (2.4) | 1.0 | 0.3 | 0.7 | 0.7 | 0.3 |
| | 5.4  (4.8) | 0.0 | 0.0 | 0.0 | 0.0 | 3.0 |
| | 10.8  (9.6) | 7.0 | 8.0 | 5.0 | 4.0 | 1.0 |
| | 21.5 (19.2) | 0.0 | 0.0 | 0.0 | 0.0 | 1.0 |
| | .3  (.3) | 3.0 | 1.3 | 1.0 | 0.0 | 0.0 |
| | .7  (.6) | 2.0 | 2.7 | 2.3 | 0.7 | 0.0 |
| | 1.3  (1.2) | 1.0 | 0.3 | 1.0 | 0.0 | 0.0 |
| non-coated 0.2/0 | 2.7  (2.4) | 1.0 | 1.0 | 4.0 | 1.0 | 1.0 |
| | 5.4  (4.8) | 0.0 | 0.0 | 0.0 | 0.0 | 0.0 |
| | 10.8  (9.6) | 1.0 | 2.0 | 3.0 | 0.0 | 1.0 |
| | 21.5 (19.2) | 0.0 | 0.0 | 0.0 | 0.0 | 0.0 |

*after last treatment

Serpentine leafminers *(Liriomyza brassicae)* were obtained from artichoke leaves growing in the field. The artichoke leaves were placed onto the chrysanthemum foliage so that as adult leafminers emerged they would feed and oviposit on the chrysanthemum tissue. Assessment of active ingredient effect was obtained by observing leaf punctures and counting the number of leafminer traces that occurred.

Table 11 below shows information collected from serpentine leafminer studies. These studies indicate that the resin coated material was more efficacious in controlling this insect than the uncoated material; however, the population level was too low to draw a conclusion other than that the preparations were similar in effect. Again, as pointed out above with the green peach aphid and cabbage looper, the non-coated fertilizer would have caused quick salt mortality in the absence of resin coating. Combination of carbofuran with the fertilizer, both resin coated, is advantageous.

18

TABLE 11

Biological assay of slow release granules, showing serpentine leafminer (*Liriomyza brassicae*) control resulting from treatment with different carbofuran-resin coating combinations

| Sample batch No. Active ingr. conc./pph resin | Rate kg a.i./hectare (lbs. a.i./A) | | Average (4 replicates) number of leaf miners found on 36th day |
|---|---|---|---|
| | .3 | (.3) | 0.3 |
| | .7 | (.6) | 0.7 |
| | 1.3 | (1.2) | 0.3 |
| 18 0.2/2+10 | 2.7 | (2.4) | 0.0 |
| | 5.4 | (4.8) | 0.0 |
| | 10.8 | (9.6) | 0.0 |
| | 21.5 | (19.2) | 0.0 |
| | .3 | (.3) | 0.0 |
| | .7 | (.6) | 0.7 |
| | 1.3 | (1.2) | 2.7 |
| non-coated 0.2/0 | 2.7 | (2.4) | 0.0 |
| | 5.4 | (4.8) | 2.0 |
| | 10.8 | (9.6) | 0.0 |
| | 21.5 | (19.2) | 0.0 |

Example 6

Biological assessment of slow-release carbofuran used against the rice water weevil

Coated carbofuran was biologically assessed against the rice water weevil (*Lissorhoptrus oryzophilus*), referred to sometimes as RWW, on rice plants. This experiment was conducted in three fields of a rice experiment station in central California. Treatments were superimposed upon normal rice culture for the station. Before flooding, two 6.1×3.1 m (20×10 ft.) plots were staked out in previously untreated areas, within 1.5 m (five feet) of the field margin. One of these plots, seeded with rice, at each end of each field, was treated with a controlled release formulation of the FMC Furadan 5G (5% active ingredient, granular) formulation coated with 8 pph resin (sample #19) and 12 pph resin (sample #20) applied at the equivalent of 0.5 pounds of active ingredient per acre. The resin was the same as described in Example 1 above. The pesticide formulations were applied via a hand-held shaker. The areas surrounding these plots were untreated and sowed with rice seed as controls.

To compare the effectiveness of the gradual release formulations from the 53rd day through the 68th day after seeding, ten four-inch diameter cores were removed from each plot. At the end of this time the cores were washed and evaluated for immature RWW (rice water weevils). Plants from the cores were taken to the laboratory and frozen for later plant characteristics measurements. Five months after seeding, a portion of each plot was harvested by machine. Samples were taken from the harvest of each of these plots for determination of percent moisture of the grain. The plant growth characteristics, immature RWW counts (larvae plus pupae) and yields obtained from treatment with slow-release formulations were analyzed with yields from airplane applications of the commercial non-coated formulations of carbofuran and yields from untreated controls for comparative purposes. The only major difference between the tests was the hand application of the slow-release formulations *vs* the airplane application of the commercial non-coated formulation. Statistical tests, a two-way (analysis of variance) ANOVA and Duncan Multiple range test, were run on the results as indicated below in Table 12 by the $\bar{x}$ figures.

The results obtained from this study, as set forth in Table 12 below, show prill #19 at 0.6 kg active ingredient per hectare (0.5 pounds active ingredient per acre), was the best of the coated granules tested here and was nearly equal in immature larva control to the results from the 1.1 kg active ingredient per hectare (one-pound active ingredient per acre) application of non-coated Furadan 5G. In all of the other parameters measured, this slow-release granule (sample #19) was nearly equivalent to the results obtained from 1.1 kg active ingredient per hectare (one-pound active ingredient per acre) application of non-coated 5G Furadan. It was superior to 0.6 kg active ingredient per hectare (0.5 pounds active ingredient per acre) of non-coated 5G Furadan. The slower releasing granule (#20) also gave efficacious control; however, statistically it was not as good as prill #19.

TABLE 12
Efficacy of four formulations of granular carbofuran, two coated and two non-coated for rice water weevil
control

| Carbofuran | Rate | | Plant growth characteristics | | | | | | | |
| --- | --- | --- | --- | --- | --- | --- | --- | --- | --- | --- |
| | kg a.i. per hectare | lbs. Al per acre | $\bar{x}$ wet wt. (g) | $\bar{x}$ plant ht. (cm) | $\bar{x}$ number tillers* | $\bar{x}$ root vol. (ml) | $\bar{x}$ root dry wt. (g) | $\bar{x}$ yield lbs/acre | $\bar{x}$ No. immatures/core | $\bar{x}$ yield kg/hectare |
| Sample 19 | 0.6 | 0.5 | 31.1c | 43.6ab | 4.6c | 4.8c | 0.47b | 6694 | 2.8a | 7497 |
| Sample 20 | 0.6 | 0.5 | 11.0bc | 42.5ab | 4.4c | 4.7bc | 0.44ab | 6739 | 4.1ab | 7548 |
| Non-coated | 0.6 | 0.5 | 7.6ab | 38.1ab | 3.2ab | 3.4ab | 0.311ab | 6526 | 8.2b | 7309 |
| Non-coated | 1.1 | 1.0 | 11.7c | 44.8b | 4.2bc | 4.5bc | 0.421ab | 7588 | 1.9a | 8499 |
| Untreated Control | | — | 6.0a | 37.4a | 2.8a | 2.8a | 0.28a | 6328 | 7.4b | 7087 |
| Significance level | | | 1% | 1% | 1% | 1% | 1% | ns | 1% | |

*Tillers are shoots put forth by rice plants.
ns=no significance

The presence of the same letter (a or b or c etc.) beside two figures means that there is no significant difference between them. E.g. 13.1c, 11.0bc, and 7.6ab means that there is no significant statistical difference between 13.1 and 11.0 in this instance, nor is there any significant statistical difference between 11.0 and 7.6, but there is significant statistical difference between 13.1 and 7.6.

Resin is *same as* in Example 1.

### Example 7
Greenhouse experiment employing carbofuran against the rice water weevil

A greenhouse experiment measuring efficacy of resin-coated carbofuran product against the RWW was conducted. Five containers of soil collected from the above-mentioned rice experiment station were treated using sample #19 applied at the rate of 0.6 kg of active ingredient per hectare 0.5. lbs of active ingredient per acre). The soil was sifted through a screen with 312 meshes per metre (8 meshes per inch) and filled into 0.7 litre (1-1/2 pint) plastic containers, each filled to within (2.5 cm) one inch of the top. The granules were sprinkled across the top of the soil in five containers, and five containers were left untreated for comparison purposes.

After applying the carbofuran to the soil, all of the containers were placed in a randomized complete block design in large water-filled metal trays. Each container was flooded and seeded with eight pre-soaked S-6 rice seeds. The rice was thinned to two rice plants per container, after the plants emerged through the water. All containers received an adult weevil infestation 22 days after seeding. This consisted of confining four weevils per container with two rice plants for 48 hours, after which adult mortality was recorded. Twenty nine days after such infestation, the roots of the plants in each container were washed in screen cylinders, and "immatures" (larvae and pupae) were recovered and counted. Plants were taken to the laboratory, and plant characteristics were recorded for the ten plants of each treatment. A two-way ANOVA and Duncans Multiple Range statistical test for adult mortality and the immatures recovered was run.

Highly effective control of the immature larval stages (see Table 13 below) was obtained with the slow-release preparation. It was among the better treatments and was statistically no different from the numerically best treatment. It was statistically significantly better than the untreated checks.

### TABLE 13
Efficacy of resin coated carbofuran 5G compared to non-coated carbofuran 5G, on rice water weevil control both at 0.6 kg/hectare (0.5 lb/acre); Greenhouse

| Treatment No. | Carbofuran 5G S-standard R-resin coated | Adult mortality % | $\bar{x}$ No. immatures per 2 plants |
|---|---|---|---|
| 1 | S | 45a | 4.8ab |
| 2 | S | 35ab | 1.8a |
| 3 | S | 35ab | 5.4ab |
| 4 | S | 50a | 9.8bc |
| 5 coated 8 pph | R | 11bc | 8.0ab |
| 6 (Control check) | — | 0bc | 18.8cd |
| 7 (Control check) | — | 5c | 32.6d |
| Significance level | | 1% | 1% |

### Example 8
Slow-release tests employing molinate as a weed killer

100 grams of commercially obtained Ordram 10G (Ordram is a registered trademark of Stauffer Chemical Co.; 10G means that the active ingredient, molinate, is 10% of the composition and that the composition is in granular form) were placed in a beaker to which 8 g. of 65% resin (n.v.) solution was added. The resin was the same copolymer as that used in Example 5 above. The beaker was placed into the rotating cup coater and rotated at 5 to 6 r.p.m. The molinate composition and resin were added at ambient temperature as a single step addition and then brought up to 43°C (110°F). The mass was tumbled upon itself for approximately 30 minutes until a free-flowing, cured-resin-coated granular preparation was obtained. An additional amount of 4 g. of resin solution (bringing total to 12 g.) was added while the prills were still warm from the previous heating. The beaker was replaced in the cup coater and the temperature brought back up to 43°C (110°F). and tumbled for an additional 15 to 20 minutes until a free-flowing cured-resin-coated granular preparation was obtained. These prills were examined visually and found to be shiny, a usual indication of complete coating.

These prills, sample batch #21, were submitted to soak evaluation as previously described. Data in Table 14 below show significant amounts of material are released through seven days. The reduction of molinate odor occurring in the air around a small sample of the coated prills, when compared with non-resin-coated granules, was reduced from offensive to the point of non-detection.

TABLE 14

Summary of the release characteristics of resin-coated and non-resin coated molinate granules soaked in water, showing the number of micrograms of active ingredient in the water at each sample time

Micrograms of molinate

| | Sample batch No. 21 at 1 gram/100 ml | | | | Ordram 10G at 1 gram/100 ml | | | |
|---|---|---|---|---|---|---|---|---|
| | (Theory 91,200 µg molinate) | | | | (Theory 100,000 µg molinate) | | | |
| Sample timing | Replicate | | Avg | Acc % | Replicate | | Avg | Acc % |
| | 1 | 2 | | | 1 | 2 | | |
| 1 hr | 14,000 | 11,000 | 12,500 | 13.7 | 22,000 | 22,000 | 22,000 | 22.0 |
| 24 hrs | 29,000 | 28,000 | 28,500 | 45.0 | 50,000 | 45,000 | 47,500 | 69.5 |
| 48 hrs | 14,000 | 13,000 | 13,500 | 59.8 | 14,000 | 19,000 | 16,500 | 86.0 |

These resin-coated molinate granules were tested for effectiveness in controlling a number of weeds which are generally troublesome in rice fields.

In early work by others in attempting to control such weeds it had been noted that when the non-coated commercially available molinate formulations were Ordram 10G applied to the water in the form of impregnated attapulgite granules, 75% of it was released to the atmosphere within seven days after application. This severe loss of molinate (S-ethyl hexahydro-1 H-azepine-1-carbothioate), which is the active ingredient in commercial Ordram herbicide, is shown in an article by Soderquist, Bowers and Crosby, in Agriculature and Food Chemistry, Vol. 25, No. 4, 940—945, July/Aug. 1977 and includes tests that were done in a rice field.

In a test carried out at a rice experiment station, where a number of paddies have been sub-divided for experimental purposes, one such sub-division was flooded with a substantial amount of water and maintained continuously at 8—10 centimeters depth. Sheet aluminum-ringed plots, each 4.5 square meters area, were set up in such a way that three replicates per-treatment existed in a random complete block design.

M-9 variety rice was seeded, using a 112 kilogram per hectare seeding rate (60 grams per plot) broadcast over the plot areas. Ten to twelve days later, Ordram 10G granules, coated with resin as described hereinabove to provide two coating layers in a total coating of 6 pph (4+2 pph) resin, sample batch number 22, were applied by broadcast application. Non-coated Ordram 10G granules were similarly applied in three control plots five days after the application of the coated molinate product. All plots were treated in exactly the same way during the trial, with common water throughout. There was at least an 0.46 m (18-inch) space between each ring and the next, and no cross-contamination was observed visually or analytically (water analysis) between rings.

Assessments for rice stand reduction in weed control were made 41 days and 62 days after seeding. Counts of rice plants and weed plants, identified to species, were made by using a one square meter ring dropped into the center of each aluminum ringed plot. The plot having the highest number or rice plants (greatest plant density) was set as 100%; all others had a lower percentage as plant density decreased. The check plot, to which no herbicide was added, may have had a low crop plant density due to many factors besides chemical injury, such as weed competition, plant disease, or other factors. With regard to weed counts, the plot having the largest number of individuals of a given weed species was considered as "0", i.e., zero weed control, and reduction from this maximum number was expressed as percent control. The presence of no weeds in a plot equaled 100% control.

Rice yield information was collected by harvesting the individual plots, threshing the plants to obtain the coated seed, free of chaff and other debris. These samples were weighed, moisture readings made, and their weights adjusted to an even moisture level of 12% water, which is the recognized international moisture level standard.

Table 15 presents a summary of the weed control and rice yield data obtained from this test. The rice stand reduction data suggests some phytotoxicity associated with increased rate of the coated molinate. Watergrass weed control (*Echinochloa crus-galli* var. *oryzicola*, shown as Evco in the table) was evident with all treatments.

## TABLE 15
### Summary of rice yield and weed control data resulting from resin-coated and non-resin coated molinate treatments

| Application | | | | Percent weed control at (days) indicated[3] | |
|---|---|---|---|---|---|
| Treatment | Rate kg a.i./ hectare (lbs. a.i./A) | Timing | Rice stand reduction (%)[1] 41 62 DAS[2] | Evco 41 62 | Rough rice yield at 12% moisture Avg Cwt/A[4] |
| Molinate prill #22 | 2.8 (2.5) | 11—13 DAS | 36 30 | 100 98 | 92.7ab |
| Molinate prill #22 | 5.6 (5.0) | 11—13 DAS | 12 21 | 100 100 | 86.6abc |
| Molinate prill #22 | 11.2 (10.0) | 11—13 DAS | 22 26 | 89 100 | 90.8abc |
| Non-coated Ordram 10G | 5.6 (5.0) | 16 DAS | 0 2 | 100 100 | 90.8abc |
| Untreated | — | | 18 7 | 86 92 | 88.5abc |

[1] Rice stand reduction can occur from weed competition and chemical injury; stand reduction in the untreated stand is a measure of reduction due to competition.

[2] DAS-Days After Seedings—Stand reduction and weed control readings were made 41 and 62 days after the plots were seeded.

[3] Weed readings are based on the highest treatment-mean plant density for the species measured.

| Botannical name | Common name |
|---|---|
| EVCO—*Echinochloa crus-galli* var. *orizicola* early and late forms | (Watergrass, barnyard grass) |

[4] The rice yield data were all adjusted to the international standard for rice moisture (12%); numbers followed by the same letter are *not* statistically different from each other.

In summary it can be seen that the resin-coated molinate product was as effective when applied at half the commercial rate as the non-coated material applied at the full commercial rate of 5.6 kg a.i./hectare (5 lbs. a.i./A). Rice stand reduction appeared to be increased by the slow release treatments, however, the yields obtained from all slow release treatments exceeded yields obtained from the untreated trials. This reduction in stand followed by no reduction in yield is a common phenomenon associated with grass plants able to tiller (throw out new shoots) when plant competition for sunlight is reduced. These data clearly show that M9 rice variety tolerated a rate of 11.2 kg (10 lbs.) active ingredient with no yield reduction and that commercial weed control was obtained at a rate of 2.8 kg a.i./hectare (2-1/2 lbs. a.i./A), which is half of the commercially recommended rate for the non-coated molinate treatment.

Example 9
Improving the resin coating of molinate herbicides

50 lbs. Ordram 10G granules obtained commercially were added to the pilot coater, which was rotated at 5 to 6 r.p.m. An amount of 50% n.v. resin of the type used in Example 5 was added to give 4 pph coating with the bed at ambient temperature. After the prills were completely coated, the bed temperature was brought up to 63°C (45°F) and was maintained there until the resin was cured. At this time, one pound of coated granules was withdrawn; as the tumbling drum was restarted an additional 2 pph resin was added with the bed temperature between 63° and 65.5°C (145° and 150°F). When the resin was completely added and cured, the drum was stopped and again one pound of cured prills withdrawn. The drum was restarted, an additional amount of 2 pph resin was added with the bed temperature sustained at 63°C (145°F) and 65.5°C (150°F) until the prills were again cured, at which time another one pound sample was withdrawn. Additions of resin were lowered each time to compensate for the decreasing amounts of prills in the rotating drum. Additional amounts of resin were added at 2 pph increments to a total of 20 pph (samples 23—31). During the duration of this process the bed temperature was retained between 63° and 65.5°C (145° and 150°F).

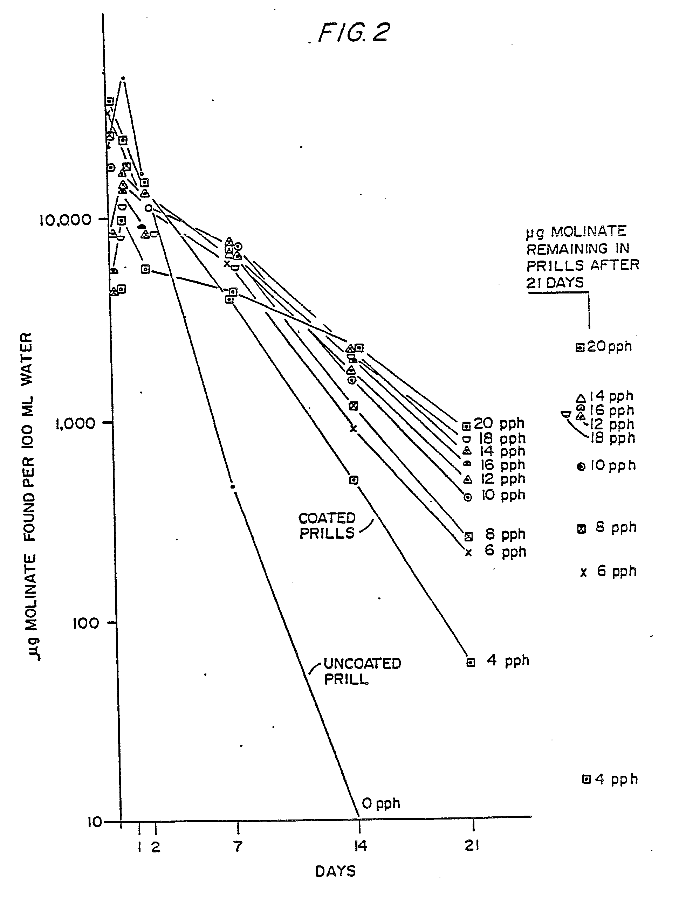

Results obtained from soak studies run as previously described above are displayed in Figure 2. These compare the non-coated Ordram 10G release with that of incrementally resin-coated Ordram 10G granules and it is clear that an incremental delayed release is obtained as the resin level increases, and there is a progressively flatter release curve with increasing amounts of resin. In addition, there is an increasing amount of residual active ingredient in the prill after 21 days with increasing resin.

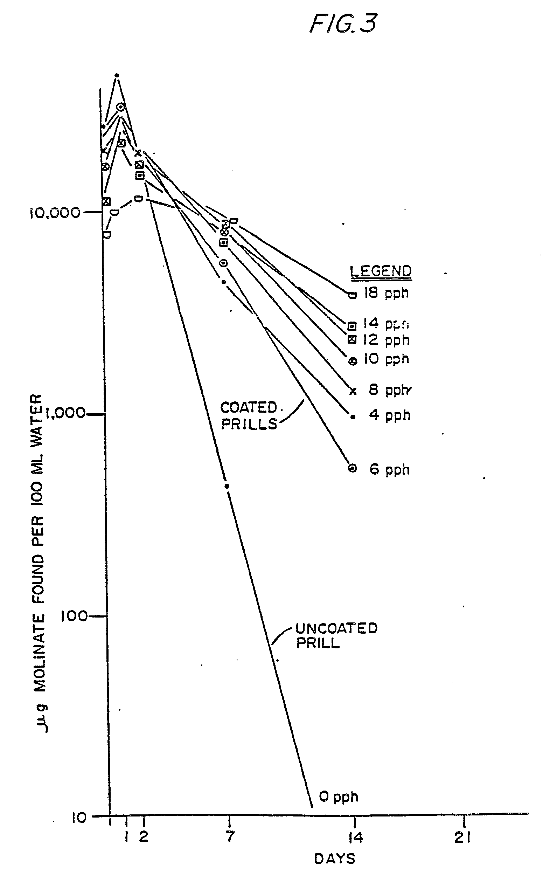

A second series of resin coatings with Ordram 10G was conducted using a 30% n.v. resin. The coating procedure was as described above for the 50% n.v. resin, yielding granules coated at 4, 6, 8, 10, 12, 14, 16, and 18 pph, and the follow-up soak studies were also conducted in the same way. Data displayed in Figure 3 show that there is a general trend towards greater reduction in release with the use of 30% n.v. solids resin. This trend is most notable at the lower coating levels. The irregular attapulgite particles appear to be coated more completely with the lower resin levels, using 30% solids as opposed to 50% solids.

It is suitable to employ, in this invention, the coated prills or the like of molinate containing from 0.1% to 20.0% by weight of the active ingredient based on the weight of the core, and excellent results are obtained using from 5% to 15% thereof.

Example 10

Coating malathion and using the slow-release malathion to control mosquitoes

Malathion is the common name given to the organophosphorous insecticide, [(dimethyoxyphosphino-thioyl) thio butanedioic acid, diethyl ester. Malathion possesses low mammalian toxicity and limited water solubility (145 mg/liter or 145 ppm or 0.0145%). Its half-life in solution is reported to be 7.8 hours at pH 7, it is increasingly unstable in alkaline solutions, but can withstand weekly acidic solutions (pH greater than 2) for reasonable periods of time.

Because of its hydrolytic instability, malathion has very little residual life (i.e., high concentrations must be used under typical field applications—particularly in irrigation ditches—to ensure that insecticidal levels are maintained long enough to kill a preponderence of the insects present).

Mosquito control is an important public health goal, particularly in elimates without prolonged periods of sub-freezing temperatures, because of the role of the mosquito as a "vector" for many important diseases in man and animals (malaria, encephalitis, etc). Repeated and increasing mosquito infestation of human or mammalian populations by any one of a number of mosquito species is generally associated with the build-up of a large infective potential. Even though clinical disease is initially absent, high infective potential makes it difficult to limit any resultant disease outbreak to just a few cases (Cf. recent reports concerning malaria and encephalitis outbreaks in Africa and South-East Asia).

By this invention, an organophosphorous agent can be formulated so as to release the agent over a long period of time in water, and to allow it to lie "dormant" in a dry environment until needed (as when water is present, as by heavy rainfall or flooding, and mosquito eggs are hatching into larvae). This means not only does the slow-release formulation of this invention protect the agent from the environment until the agent is needed, it also can have the effect of protecting casual mammalian and avian passersby from the pesticide. Organophosphorous insecticides are exemplified by malathion and can be treated, via the above-described slow-release formulations according to this invention, so as to accomplish the following desirable objectives:

1. Single or reduced number of applications of insecticides.
2. Reduced total environmental burden.
3. Increased suppression of resistant species.
4. Reduced hazard to users or casual passersby.

Production of granules to assess the ability of the current process to achieve the above objectives was done as follows:

200 grams of 16/30 mesh commercial attapulgite granules were put into a beaker and the beaker placed into the rotating device, rotating at 5 to 6 r.p.m. An amount of malathion (50% water emulsifiable concentrate in organic solvent) was added to the attapulgite granules to give a final concentration of 1% by weight of malathion. The material was tumbled until such time as all associated solvents had evaporated. At this time there was added approximately 10% by weight, based on the weight of the core, of resin in a 65% n.v. solution. The beaker was replaced into the rotating device and again rotated at 5 to 6 r.p.m. Heated air was applied until the bed temperature ranged between 63° and 65.5°C (145° and 150°F). Two more batches of prills were prepared using respectively 18% and 25% by weight as above of resin to coat the two successive prill preparations. These prill samples were numbered 26, 27, and 28 respectively. The resin employed is a copolymer of 38% dicyclopentadiene and 62% linseed oil. The resin is conveniently added in solution in mineral spirits in most of these examples, but other suitable organic solvents can be employed, if desired.

Efficacy of these prill preparations was evaluated by placing two grams of each sample in 100 mls water and comparing its release with that of a like amount of uncoated 1% malathion on attapulgite formulation in 100 ml water, which was used as a positive control. After one hour, the supernatant from each container was decanted, and the granules resuspended in 100 ml of freshly added water. This procedure was repeated after 24 hours, 5 days, 12 days, 15 days, and 24 days. In each case the decantate was bioassayed by placing the volumes shown (in Table 16 below) in 100 ml of water into which 5—10 mosquito larvae were placed. The number of mosquito larvae killed was recorded after 18—24 hours, and the percent mortality was calculated.

25

It can be seen from data presented in Table 16 below that prill batches 26 and 27 continued to release significant levels of toxicant after the repeated replacement of water had effectively removed malathion from the uncoated control. It appeared that too much resin was present on prill 28 for it to release sufficient levels of malathion soon enough to kill within a three day period, but sufficient malathion was released within 5 days to cause mortality that was sustained. Inasmuch as the $LD_{50}$ of malathion to mosquito larvae is approximately 0.02 ppm, we can infer, for example in the data for prill No. 27 for 5, 15, and 24 days, that 1 ml of the decantate diluted into 100 ml furnished sufficient toxicant to kill 60% of the mosquitos, or that 1 ml contained slightly more than 2 micrograms ($\mu$g) of toxicant. From the results with prill No. 26 at 12 days, it can be inferred (assuming linearity) that the $LD_{50}$ probably would have been 0.35 ml of the 12 day decantate. If the assumption is correct, this would mean that 0.35 ml contained about 2 $\mu$g, roughly three times the concentration of the other samples.

TABLE 16
Larvaecidal activity of decantates from malathion controlled release evaluation (1% active ingredient in all prills)

| Prill batch # | % Kill found 24 hours | | % Kill found 5 days | | % Kill found 12 days | | % Kill found 15 days | | % Kill found 24 days | |
|---|---|---|---|---|---|---|---|---|---|---|
| | Added ml | %-kill | Added ml | %-kill | Added ml | %-kill | Added ml | %-kill | Added ml | %-kill |
| 26 (10 pph resin) | | | 2 | 100 | | | 2 | 100 | 2 | 100 |
| | 1 | 100 | 1 | 60 | | | 1 | 60 | 1 | 60 |
| | .2 | 0 | 0.5 | 20 | .5 | 100 | | | | |
| | | | 0.2 | 0 | .2 | 0 | | | | |
| 27 (18 pph resin) | | | 2 | 100 | 2 | 100 | 2 | 100 | 2 | 80 |
| | 1 | 100 | 1 | 90+ | 1 | 100 | 1 | 100 | 1 | 0 |
| | | | .5 | 0 | .5 | 60 | .5 | 80 | | |
| | .2 | 0 | .2 | 0 | .2 | .0 | .2 | 0 | | |
| 28 (25 pph resin) | | | 4 | 60 | 4 | 100 | | | | |
| | | | 2 | 0 | 2 | 100 | | | | |
| | 1 | 0 | | | | | 1 | 100 | 1 | 0 |
| | | | | | | | .5 | 40 | | |
| | .2 | 0 | | | | | .2 | 20 | | |
| | | | | | | | 8 | 20 | 16 | 0 |
| Control | | | | | | | 4 | 0 | | |
| | 1 | 100 | 1 | 100 | 1 | 0 | | | | |
| Non-Coated | | | .5 | 60 | | | | | | |
| | .2 | 0 | .2 | 0 | | | | | | |

**0 079 668**

Table 17 below shows the results of chemical analysis of prills before starting the slow-release study (prior to soaking) and chemical analysis of the prills after the 31 days soak period. The data obtained show that all of the malathion was washed away by the 12—15th day from the uncoated control and that most of the toxicant released was found after 24 hours. The results also show that higher levels of coating, according to this invention, significantly slows the amount of malathion released, and offers a high degree of protection from hydrolysis of the active ingredient.

TABLE 17
Results obtained from chemical analysis of pre- and post-water soaked prills and the malathion levels in the
water decantates

| Prill # | Prill original concentration | | Decantate concentration of malathion (mg/ml) | | | | | | | Prill Final total present mg/2 gm | % of original level |
|---------|-----|---------|----------|-----------|----------|-----------|-----------|-----------|-----------|---------|---------|
| | % | mg/2 μm | 1 Hr. | 24 Hr. | 5 Day | 12 Day | 15 Day | 24 Day | 31 Day | | |
| 26 10 pph | 0.7% | 14,000 | 19 | 36 | 25 | 25 | 15 | 9 | 4 | 278 | 2.0 |
| 27 18 pph | 0.5% | 10,000 | 4 | 18 | 24 | 17 | 12 | 10 | 6 | 2110 | 21.1 |
| 28 25 pph | 0.5% | 10,000 | 0 | 1 | ND* | 12 | 8 | 10 | 8 | 3990 | 39.9 |
| Control | 1.0% | 20,000 | — | 99 | 36 | 2 | 0 | 0 | 0 | 6.70 | 0.0 |

*ND=None detected

Example 11

Other pesticide formulations

Examples of other pesticides or formulations prepared according to this invention are shown in Table 18 below. The resin or adduct employed to coat the pesticide-containing core is the same as described in Examples 1 and 2 above, but in solution in mineral spirits, the solution being of the non-volatile content indicated in this Table. The coating is single or multiple-layered as also indicated, e.g. 6 pph is a single layer application and 10+10 pph consists of two successive layers of 10 pph each.

TABLE 18
Useful formulations according to this invention of a number of pesticides

| | Toxicant | Amounts % of core weight | Kind of core | Resin amount: pph | % Non-volatiles | Chemical formula of toxicant |
|---|---|---|---|---|---|---|
| 1 | Fenamiphos | 0.6 | 21-7-14 fertilizer | 2+4 | 65 | Ethyl-3-methyl-4-(methylthio) phenyl (1-methyl ethyl) phosphoramidate |
| 2 | Fenamiphos | 2.0 | 21-7-14 fertilizer | 1+5+6 | 40 | Ethyl-3-methyl-4-(methylthio) phenyl (1-methyl ethyl) phosphoramidate |
| 3 | Molinate | 10.0 | corn cob particles | 6 | 50 | S-ethyl hexahydro-1H-azepine-1-carbothioate |
| 4 | Fenamiphos | 0.06 | attapulgite 16/30 mesh | 6 | 50 | Ethyl-3-methyl-4-(methylthio) phenyl (1-methyl ethyl) phosphoramidate |
| 5 | Fenamiphos | 0.06 | corn cob particles | 12 | 50 | Ethyl-3-methyl-4-(methylthio) phenyl (1-methyl ethyl) phosphoramidate |
| 6 | Fenamiphos | 7.0 | corn cob particles | 14 | 50 | Ethyl-3-methyl-4-(methylthio) phenyl (1-methyl ethyl) phosphoramidate |
| 7 | EPTC | 2.3 | EPTC granules and sodium sorbate | 2+2 | 50 | S-ethyl dipropylthiocarbamate |

TABLE 18 (continued)
Useful formulations according to this invention of a number of pesticides

| Toxicant | Amounts % of core weight | Kind of core | Resin amount: pph | % Non-volatiles | Chemical formula of toxicant |
|---|---|---|---|---|---|
| 8 Carboxin | 0.06 | attapulgite 16/30 mesh | 2+4 | 50 | 5,6-dihydro-2-methyl-N-phenyl-1, 4-oxathin-3-carboxamide |
| 8A Carboxin | 0.06 | corn cob 14/40 mesh | 2+4 | 50 | 5,6-dihydro-1-methyl-N-phenyl-1, 4-oxathlin-3-carboxamide |
| 9 Acephate | 0.06 | attapulgite 16/30 mesh | 2+4 | 50 | O,S-dimethyl acetylphosphoramido-thioate |
| 9A Acephate | 0.06 | corn cob 14/40 mesh | 2+4+6 | 50 | O,S-dimethyl acetylphosphoramido-thioate |
| 10 Oxydemetonmethyl | 0.06 | attapulgite 16/30 mesh | 2+4+6 | 50 | S-[2-(ethylsulfinyl) ethyl] 0,0-dimethyl phosphorothioate |
| 11 Fluvalinate (a synthetic pyrethroid) | 0.06 | attapulgite 16/30 mesh | 2+4 | 50 | N-[2-chloro-4-(trifluoromethyl) phenyl]-DL-valine (±)-cyano (3-phenoxyphenyl) methyl ester |
| 12 Monochlorophenoxy acetic acid (MPCA) | 5% | attapulgite 16/30 mesh | 2+4 | 50 | 4-chloro-2-methyl phenoxyacetic acid |
| 13 Bifenox | 10% | 10% Modown® granules | 2+4 | 50 | methyl 5-(2,4-dichlorophenoxy)-2-nitrobenzoate |
| 14 Fenvalerate | 0.06% | attapulgite 16/30 mesh | 2+4+6 | 50 | cyano (3-phenoxyphenyl) methyl 4-chloro-alpha-(1-methylethyl) benzeneacetate |

TABLE 18 (continued)
Useful formulations according to this invention of a number of pesticides

| | Toxicant | Amounts % of core weight | Kind of core | Resin amount: pph | % Non-volatiles | Chemical formula of toxicant |
|---|---|---|---|---|---|---|
| 15 | Butachlor | 5% | attapulgite 16/30 mesh | 2+4+6 | 50 | N-(butoxymethyl)-2-chloral-2', 6'-diethylactanilide |
| 16 | Thiobencarb | 10% | 10% Bolero granules | 6+2 or 6+2+2+2 +2+2+2+2 | 50 | S-(4-chlorophenyl) methyl diethylcarbamothioate |
| 17 | Thiobencarb | 10% | 10% Bolero granules | 1 layer 6 pph 1 layer 12 pph 1 layer 18 pph | | S-(4-chlorophenyl) methyl diethylcarbamothioate |
| 18 | Perfluidone | 10% | attapulgite 16/30 mesh | 2+4+6 | 50 | (1,1,1-trifluoro-N [2 methyl-4-(phenylsulfonyl) phenyl] methane-sulfonamide) |
| 19 | Bactimos | 5 g per 150 g core | Bactimos wet-able powder and attapulgite 16/30 mesh | 2+4+6 | 30% | Bacillus thuringiensis israeliensis |
| 20 | Bactimos | Chloroform extract of 15 g. Bactimos wettable powder | Attapulgite 16/30 mesh | 2+4+6 | 30% | Bacillus thuringiansis israeliensis |
| 21 | Molinate+ MCPA (item 12) | 10%+2% | Attapulgite 16/30 mesh | 2+4+6 | 50% | Given above |

0 079 668

Table 19 shows advantageous ranges of the various components and types of core materials for the preparation of a number of controlled-release pesticide-containing granules according to this invention.

Table 20 shows the controlled release properties of selected pesticides containing granules according to this invention.

TABLE 19

Advantageous conditions for use of controlled-release pesticides according to this invention

| Toxicant | Amount in % based on core weight | Carrier or core | Coating in pph | Numbers of layers in coating | Utility |
|---|---|---|---|---|---|
| Carbofuran | 0.6—15% | Quartz sand<br>Vermiculite<br>Attapulgite<br>Kaolin<br>Fertilizer granules<br>Corn cobs | 2—23 | 1—24 | Insecticide, esp. aphids, weevils (rice)<br><br>Nematicide |
| Molinate | 0.1—20% | Attapulgite<br>Corn cobs<br>Vermiculite<br>Fertilizer granules<br>Kaolin | 2—26 | 1—20 | Herbicide, e.g., grassy weeds in rice |
| Malathion | 1.0—20% | Attapulgite<br>Corn cobs | 6—24 | 1—6 | Insecticide |
| Fenamiphos | 0.06—15% | Fertilizer granules<br>Attapulgite<br>Vermiculite | 6—24 | 1—4 | Nematicide |
| EPTC | 2.3—14.8% | DEXOL (Na perborate)<br>Kaolin<br>Eptam granules<br>Attapulgite. | 6—18 | 1—3 | Herbicide |
| Carboxin | 0.06—.15% | Attapulgite<br>Corn cobs | 6—12 | 2,3 | Fungicide |
| Acephate | 0.06—6% | Attapulgite<br>Corn cobs | 6—18 | 2,3 | Insecticide |
| Disulfoton | 0.06—1.0% | Vermiculite<br>Fertilizer granules | 6—18 | 1—3 | Insecticide |

TABLE 19 (continued)

| Toxicant | Amount in % based on core weight | Carrier or core | Coating in pph | Numbers of layers in coating | Utility |
|---|---|---|---|---|---|
| Oxydemetonmethyl | 0.06—1.0% | Attapulgite Corn cobs | 6—12 | 2,3 | Insecticide |
| Fluvalinate | 0.06—10% | Attapulgite Corn cobs | 6—18 | 2—4 | Insecticide |
| Monochlorophenoxy acetic acid | 5% | Attapulgite | 6—12 | 2,3 | Herbicide |
| Bifenox | 10% | Commercial Modown granules | 6—12 | 2,3 | Herbicide |
| Fenvalerate | 0.06% | Attapulgite | 6—12 | 2,3 | Insecticide |
| Butachlor | 5.0% | Attapulgite | 6—12 | 2,3 | Herbicide |
| Thiobencarb | 10% | Commercial Bolero granules | 6—20 | 2—8 | Herbicide |
| BIT-protein toxin (Bacillus thuringiensis israeliensis) | 0.001% | Attapulgite | 6—12 | 2,3 | Insecticide |
| Perfluidone | 10% | Attapulgite | 6—12 | 2,3 | Herbicide |
| Permethrin | 0.06—10% | Attapulgite Corn cobs | 6—12 | 2,3 | Insecticide |

**TABLE 20**
Controlled release properties of selected pesticide containing granules according to this invention

| Toxicant | Amount in % based on core weight | Carrier or core | Coating in pph | Measure of controlled release |
|---|---|---|---|---|
| Fenamiphos | 15 | Commercial 15G | 22 | 39% release in 24 hours vs. 83% release in 24 hours for uncoated commercial 15G. |
| EPTC | 2.3 | Commercial 2.3G | 12 | 73% release in 24 hours vs. 96% release in 24 hours for uncoated commercial 2.3G. |
| Acephate | 0.06 | 21-7-14 Fertilizer Prill | 12 | 0.4% release in 48 hours vs. 100% release in 48 hours for uncoated formulation. |
| Disulfotone | 0.15 | 21-7-14 Fertilizer Prill | 6 | 51% release in 24 hours vs. 100% release in 24 hours for uncoated formulation. |
| Oxydemeton-methyl | 0.06 | 21-7-14 Fertilizer Prill | 12 | 45% release in 24 hours vs. 67% release in 24 hours for uncoated formulation. |
| Fluvalinate | 0.06 | 21-7-14 Fertilizer Prill | 12 | 45% release in 28 days vs. 100% release in 28 days for uncoated formulation. |
| Monochlorophenoxy Acetic Acid | 5 | Gypsum | 18 | 46% release in 24 hours vs. 100% release in 24 hours for uncoated formulation. |

TABLE 20 (contd.)
Controlled release properties of selected pesticide containing granules according to this invention

| Toxicant | Amount in % based on core weight | Carrier or core | Coating in pph | Measure of controlled release |
|---|---|---|---|---|
| Bifenox | 10 | Attapulgite | 6 | Evaluation of rice stand at 35 days after seeding indicated a 15% stand reduction for the coated granule at 2 lbs. active ingredient per acre vs. a 35% stand reduction for the uncoated granule at the same rate. |
| Butachlor | 5 | Gypsum | 18 | 3.6% release in 24 hours vs. 34% release in 24 hours for uncoated formulation. |
| Thiobencarb | 10 | Commercial 10G | 18 | 1.9% release in 24 hours vs. 23.8% release in 24 hours for uncoated formulation. |
| BTI-protein Toxin (Bacillus Thuringiensis Israeliensis) | 0.001 | Attapulgite | 6 | Bioassay results indicate 7% release from coated granules in 24 hours vs. 100% release from uncoated granules in 1 hour. |

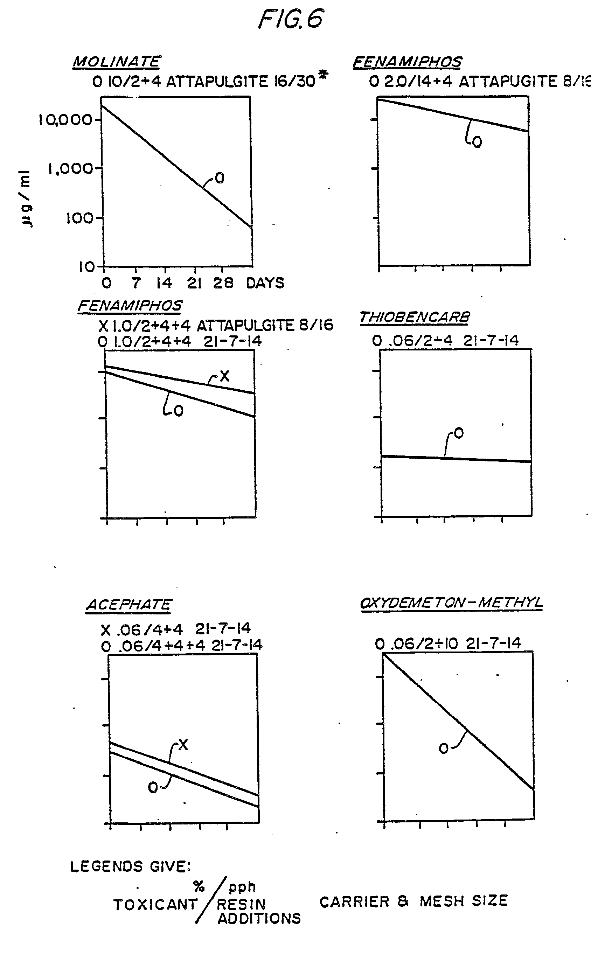

In the graphs of Figures 5 and 6, the vertical axis represents the content of the pesticide in soak water obtained in prill soak tests carried out as described above in this specification. The values are expressed as the logarithms of such pesticide content in micrograms per milliliter of soak water. The horizontal axis represents the soak time in days as indicated. The slope is determined as the ratio of such logarithm to such time.

In Figure 5, A, where attapulgite is the base core material, it can be seen that the slope, that is, the rate of release, is fairly rapid over about the 7 to 28 day period when the carbofuran insecticide is generally most needed by the growing plants. This similarly occurs according to graphs B (corn cobs), C (urea), and D (fullers earth). However, the slope is greatly reduced with carbofuran is applied over 21-7-14 fertilizer cores, graphs E (6% coating) and F (12% coating). The coating in each of these tests is the adduct or resin as described above in this specification.

On the other hand, fenamiphos on 21-7-14 fertilizer, and with 9% or 10 pph coating, exhibits a somewhat sharper slope than the same product on a attapulgite cores (Fig. 6). Oxydemetonmethyl also exhibits a desirably sharp slope when applied to 21-7-14 cores and with a 12% coating (Fig. 6).

·The release slope or line slope of the release plot curves was derived by dividing the horizontal axis of the release slope into the vertical rise of the release rate, giving a ratio between rate of release, and time of release. Unity would mean that the rate of release was constant throughout the time of testing or the life of the prill. A number smaller than 1 (unity) would reflect a very slow release in relation to the amount of active ingredient released. A number greatly above 1 indicates very rapid release of a very large amount of active ingredient.

In using controlled-release pesticide-particles, prolonged release is required, but there also must usually be a continuous release of an effective amount of the pesticide in question at the desired time or over the desired period. Thus, the use of attapulgite cores is indicated for carbofuran to obtain the desired results for short term needs, but other cores are useful with other pesticides.

Data presented in Table 21 clearly shows that a 21-7-14 fertilizer core while useful under some circumstances, is not generally a preferred carrier for carbofuran. More reliable release characteristics and better rates of release are obtainable from a solid core that is inert, in the sense of not having a high salt concentration, such as fullers earth or attapulgite clay. It has been found that non-fertilizer cores retain less residual active ingredient and clean out more completely than fertilizer cores. This is significant for regulatory purposes where crop residues at harvest are important.

It can be seen from Table 21 and Figs. 5 and 6 that even with inert cores, such as fullers earth and attapulgite clay, there is considerable difference between different such materials relative to outflow characteristics of the active ingredient. Fullers earth, for an example, has a relatively flat release slope characteristic, a slope ratio of 21,27, while attapulgite clay tends to have a very rapid release characteristic slope ratio of 146,146. Different combinations of active ingredient-core-coating level and type can enable matching of finished product to market need. Short term use may require high initial levels and rapid outflow. Long term use may require high initial levels and slow outflow. Physical combinations of prills with different release properties can broaden end use potential. Combinations of molinate 10G granules coated with 6, 12, and 18 pph resin levels as separate granules and physically combined in a ratio of 50-25-25 parts, respectively, give extended weed control beyond any component alone at a comparable rate, 2.6 kg/hectare (2.3 pounds of active ingredient per acre). These statements apply to Bolero as well as to Ordram.

TABLE 21

Comparison of inert cores as carriers for carbofuran, showing that outflow of the active ingredient is influenced by selection of the core independently of the outer coating level

| Percent active ingredient (carbofuran) | Carrier | Coating % of total weight | Release slope (ratio of X/Y) | 7 Day concentration in soak water (μg/ml) |
|---|---|---|---|---|
| 0.06 | 21-7-14 | 6 | 0.9 | 25 |
| 0.6 | 21-7-14 | 12 | 0.3 | 130 |
| 0.6 | 12-7-14 | 6 | 0.2 | 105 |
| 0.06 | Fullers Earth 10/30 | 18 | 21 | 87 |
| 0.06 | Fullers Earth 10/30 | 20 | 27 | 190 |
| 0.06 | Corn cobs 14/40 | 22 | 31 | 140 |
| 0.06 | Corn cobs 14/40 | 24 | 59 | 650 |
| 0.06 | Urea | 10 | 61 | 84 |
| 0.06 | Urea | 8 | 73 | 200 |
| 0.06 | Corn cobs 8/14 | 14 | 73 | 210 |
| 0.06 | Corn cobs 8/14 | 16 | 94 | 250 |
| 0.06 | Attapulgite 8/16 | 12 | 146 | 450 |
| 0.06 | Attapulgite 8/16 | 18 | 146 | 270 |

A porous, but rigid core, such as offered by ground-up corn cobs, gives a still different release rate. In this instance, the size of the core particle also has been found to play a role in outflow of active ingredient. Smaller corn cob particles have a slower outflow than larger corn cob particles.

Urea prills have been found to have outflow characteristics somewhat intermediate between that of granules formed on 21-7-14 fertilizer, which is very slow, and the most rapid outflow found, which was associated with granules formed on the attapulgite clay 8/16 mesh particles.

From the standpoint that it always has been thought to be possible to coat fertilizers with pesticide active ingredients using the slow release technology previously described in other literature, the foregoing results are unexpected. This new work shows that, in fact, in some uses fertilizer cores are undesirable, and from a practical standpoint are unusable, in some environments. Use of inert type cores, or organic versus a highly ionic inorganic core, such as urea versus 21-7-14 fertilizer, is most desirable.

Example 12
Additional rice field tests

Tests were carried out in a portion of the rice fields mentioned above to determine the effects of treating the test areas with molinate-containing granules prior to flooding the area with water, the granules being added both on the surface and under the surface of the soil, such as at a depth of 2 inches, and after flooding. The granules, except for Ordram 10G, were made according to this invention and contained the amount of active ingredient in percent and the amount of coating in parts per hundred or percent as shown in Table 22, below. Seeding with rice and determination of weed counts were heretofore described.

Table 22 includes data collected from pre-flood applications and post-flood applications made at the 0 to 1 leaf stage, the 2 to 3 leaf stage, and 3 to 4 leaf stage. This table compares the control obtained with non-coated Ordram 10G, and Ordram 10G coated 6, 12, and 18 parts, where each is examined separately at the different application timings.

40

TABLE 22
Effects of herbicide treatments made at four different application timings on Late watergrass; readings made 60 days post flooding

| Treatment [1] Agent | Pre-flood application | | | | 0—1 Leaf stage post-flood application | | 2—3 Leaf stage post-flood application | | 3—4 Leaf stage post-flood application | |
|---|---|---|---|---|---|---|---|---|---|---|
| | lbs. a.i./A | kg a.i./h | Mean[2] No. plants | Signif. P=0.01 | Mean[2] No. plants | Signif. P=0.05 | Mean[2] No. plants | Signif. P=0.05 | Mean[2] No. plants | Signif. P=0.05 |
| Check | | | 38 | a | 59.5 | a | 55.5 | a | 20.0 | abc |
| 1. O | 2.5 | 2.8 | 8.0 | b | 2.5 | b | 4.5 | b | 3.0 | c |
| 2. O | 5.0 | 5.6 | 0.5 | b | 1.5 | b | 2.5 | b | 9.5 | abc |
| 3. O | 10.0 | 11.2 | 1.0 | b | 2.5 | b | 1.0 | b | 2.0 | c |
| 4. O—6 | 2.0 | 2.2 | 4.5 | b | 5.0 | b | 3.0 | b | 25.5 | a |
| 5. O—6 | 4.0 | 4.5 | 4.5 | b | 14.5 | b | 2.5 | b | 10.0 | abc |
| 6. O—6 | 8.0 | 9.0 | 1.5 | b | 3.5 | b | 0.5 | b | 3.5 | bc |
| 7. O—12 | 1.8 | 2.0 | 11.0 | b | 3.5 | b | 5.5 | b | 10.0 | abc |
| 8. O—12 | 3.6 | 4.0 | 2.5 | b | 4.5 | b | 1.5 | b | 11.5 | abc |
| 9. O—12 | 7.2 | 8.1 | 3.0 | b | 4.5 | b | 0.5 | b | 1.0 | c |
| 10. O—18 | 1.7 | 1.9 | 12.0 | b | 4.5 | b | 5.5 | b | 8.0 | bc |
| 11. O—18 | 3.4 | 3.8 | 2.5 | b | 11.0 | b | 7.5 | b | 11.5 | abc |
| 12. O—18 | 6.8 | 7.6 | 0.5 | b | 8.5 | b | 0.1 | b | 3.0 | c |
| 13. OC—12 | 1.8 | 2.0 | 11.0 | b | 24.0 | b | | | | |
| 14. OC—12 | 3.6 | 4.0 | 4.0 | b | 1.5 | b | | | | |
| 15. OC—12 | 7.2 | 8.1 | 2.5 | b | 3.5 | b | | | | |

0 079 668

TABLE 22 (contd.)
Effects of herbicide treatments made at four different application timings on Late watergrass; readings
made 60 days post flooding

| Treatment [1] | | | Pre-flood application | | 0—1 Leaf stage post-flood application | | 2—3 Leaf stage post-flood application | | 3—4 Leaf stage post-flood application | |
|---|---|---|---|---|---|---|---|---|---|---|
| Agent | lbs. a.i./A | kg a.i./h | Mean[2] No. plants | Signif. P=0.01 | Mean[2] No. plants | Signif. P=0.05 | Mean[2] No. plants | Signif. P=0.05 | Mean[2] No. plants | Signif. P=0.05 |
| 16. B | 2.5 | 2.8 | 3.0 | b | 3.0 | b | | | 2.0 | c |
| 17. B | 2.5 | 2.8 | 10.5 | b | | | 4.5 | b | | |
| 18. B | 5 | 5.6 | 13.5 | b | 6.5 | b | 3.0 | b | 20.0 | c |
| 19. B | 10 | 11.2 | | | 3.0 | b | 3.5 | b | 7.0 | bc |
| 20. D | 5.0 | 5.6 | 4.5 | b | 1.0 | b | 2.5 | b | 5.0 | bc |
| 21. BN.5 | 2.5 | 2.8 | | | | | 4.0 | b | | |
| 22. BN.5 | 5.0 | 5.6 | | | | | 17.0 | b | | |
| 23. B 8E | 2.5 | 2.8 | | | | | 3.3 | b | | |
| 24. B 8E | 2.5 | 2.8 | | | | | | | 12.0 | abc |
| 25. ON | .5 | .6 | 2.5 | | | | | | 25.5 | a |
| 26. ON | .5 | .6 | 5.0 | | | | | | 9.5 | abc |

[1] O=Ordram 10G: no coating
 O6=Ordram 10G; 6 pph coating
O12=Ordram 10G; 12 pph coating
O18=Ordram 10G; 18 pph coating
B=Bolero 10G no coating
OC12=Ordram coated onto corn cob particles; coated with 12 pph
BN.5=Bolero 8.0 plus Nalquatic, .5% of Nalquatic
ON.5=Ordram 8E plus Nalquatic, .5% of Nalquatic
B8E=Bolero 8.0 emulsifiable
D=Drepamon 5G

[2] Mean Number of Late Watergrass plants per square meter

Table 23 shows the three coating levels applied as separate treatments in a pre-flood incorporation 51 mm (2 inches) into the soil and a pre-flood surface, compared with a post-flood application. In addition, this Table presents data on blends I, II, and III, which are blends made from the 6, 12, and 18 part coatings as indicated at the bottom of the Table. These tests show that the coated materials are equivalent to the Ordram 10G where the latter is fed at a rate approximately 0.5 kg (1 lb.) higher; and further observations have indicated that blend III is the best.

TABLE 23

Effects of herbicide treatments on rice (cv S-201) showing watergrass control, comparing pre-flood incorporated (2" deep), pre-flood surface and post-flood application timings of molinate coated and uncoated material. Four coating levels of 0, 6, 12 and 18 pph were evaluated along with physical mixtures of coated Ordram

| Material and formulation % a.i. and pph | Rate/A lbs a.i. | Kg a.i./ hectare | Mean number water grass per square meter | | | | | |
|---|---|---|---|---|---|---|---|---|
| | | | Pre-flood incorporated | | Pre-flood surface | | Post-flood | |
| | | | Mean | Signif. P=0.05 | Mean | Signif. P=0.05 | Mean | Signif. P=0.05 |
| Untreated | — | | 21.5 | a | 9.0 | a | 7.2 | N.S. |
| Molinate 7.6+6 pph | 2.4 | 2.7 | 1.8 | bc | 0.0 | b | 5.4 | |
| Molinate 6.5+12 pph | 2.2 | 2.5 | 1.8 | bc | 0.0 | b | 0.0 | |
| Molinate 5.8+18 pph | 2.0 | 2.2 | 5.4 | b | 0.0 | b | 0.0 | |
| Molinate Blend[1] | 2.2 | 2.5 | 1.8 | bc | 0.0 | b | 0.0 | |
| Molinate Blend II | 2.2 | 2.5 | 0.0 | bc | 0.0 | b | 3.6 | |
| Molinate Blend III | 2.3 | 2.6 | 1.8 | bc | 0.0 | b | 1.8 | |
| Molinate (Ordram 10G) | 3.0 | 3.4 | 1.8 | bc | 0.0 | b | 0.0 | |

[1] Blend I=25-50-25 of 6, 12 and 18 pph respectively.
Blend II=25-25-50 of 6, 12 and 18 pph respectively.
Blend III=50-25-25 of 6, 12 and 18 pph respectively.

Weed growth was greatly inhibited at all stages by the application of the granules made according to this invention. In addition to the method of use of the granules described above, a physical admixture of the granules of varying aounts of coatings, or with other pesticides for example, a mixture of molinate granules made according to this invention and Bolero granules, can be employed. Alternatively, in granules having successive layers of pesticide-coating—a second pesticide-coating can be employed; and this can be carried out with more than two successive pesticides, with due regard to sufficient amount of coatings to provide the desired controlled release. Thus, for example, a granule can be formed of a layer of or core containing an effective amount of a first pesticide, e.g., molinate, then coated as provided herein, then a second pesticide, e.g., MCPA or carbofuran, is added in the same manner, over the prepared granule, and then coated further to provide a more versatile granule, capable of inhibiting or killing more varieties of pests more completely.

Example 13
Release test of Aldicarb
A commercial granular formulation of Aldicarb (2-methyl-2-(methylthio) propanol O-[(methylamino)carbonyl]oxime) containing 15% active ingredient was coated with 10 parts per hundred

43

resin as described in Example 8. A 24-hour release test was carried out on the uncoated and coated product.

In 24 hours the uncoated product released 99%, while the coated product released only 13%.

Example 14
Release test of Dicamba

A commercial granular formulation of Dicamba (3,6-Dichloro-o-anisic acid) containing 10% active ingredient was coated with 18 parts per hundred resin as described in Example 8. A 24-hour release test was carried out on the uncoated and coated product.

The uncoated product released 100% in 24 hours, while in the same period only 4.7% of the coated product was released.

Example 15
Protection of active ingredient from microbiological degradation

Carbofuran insecticide has been used widely for corn rootworm control in areas where corn is grown. Since 1975, numerous users of carbofuran have reported poor insect control in some fields to which applications of carbofuran had been made. Studies have shown that these failures were only partly due to insect resistance to carbofuran. Instead, poor insect control has been shown to be due to poor chemical persistance in the soil.

Insecticides have been generally applied at planting time, but the corn rootworm eggs did not hatch until 3 to 5 weeks later (depending on the planting date). This common practice placed a heavy burden on the residual activity of the insecticide used to control the corn rootworm. Field studies made with carbofuran have shown that this insecticide has been rapidly lost from soils that had been treated for three or more consecutive years. In one study, less than 20% of the carbofuran added to the soil was recovered 20 days later, and only traces were recoverable after 30 days. These data are particularly important since it is essential that a toxic dose of insecticide be present approximately 25 to 55 days after treatment.

Research studies using soils treated a different number of times from none to more than 3 consecutive years have shown that the disappearance of carbofuran from treated fields was due to microbiological degradation. Sterilized field-collected soils did not show carbofuran degradation, until they became recontaminated. Soil extracts are capable of carbofuran degradation until they are sterilized. Pure culture isolates of *Achromobacter* sp., *Pseudomonos* sp. and *Actinomycetes* collected from soil samples were capable of carbofuran degradation. The latter two groups of microorganisms were shown to be capable of rapid carbofuran degradation. Soils not previously treated with carbamates exhibited a time lag between application and chemical disappearance due to microbiological degradation. With each application, the time lag was shortened, because of the population increase of facultative organisms able to use carbofuran and related analogs as a food source. Organisms capable of facultative degradation of n-methyl carbamate chemistry are also capable of at least some organic phosphate chemistry degradation. For example, some soils treated previously with phorate (O,O-Diethyl S-[(ethylthio) methyl] phosphorodithioate) show the ability to degrade carbofuran at a more rapid rate than soils without previous exposure to either phorate or carbofuran.

The present invention makes it possible to formulate a carbamate agent so as to release the agent over a long period of time and to prevent rapid microbiological degradation in soils capable of said rapid degradation. This means that not only does this invention protect the active ingredient, sustaining it in the environment for the required extended period, but also the number of the degradative microbiological population does not increase as rapidly or as greatly as before, due to the reduction in the food source totally available to the population; therefore indirect suppression of the facultative microbes occurs.

Coated granules were prepared according to Example 2 above, such that coating levels of 10 pph or 8 pph were applied to commercial carbofuran 10G granules. An amount of the coated granules and a commercial non-coated granule were added to separate 40g soil samples to give a 500 ppm theoretical amount for the non-coated 10G, 485 ppm theoretical amount for the 8 pph coated granule, and 455 ppm theoretical amount for the 10 pph coated granule. Three soils having different chemical treatment backgrounds were used. One soil (herein called Soil A) had a history of successive previous carbofuran treatments for more than three years prior to use in this experiment. A second soil (herein called Soil B) had previous exposure to successive carbofuran treatments, but exposure had ceased three years before the experiment began. A third soil (herein called Soil C) has had no known previous carbofuran exposure.

Twenty-one vessels were established with soil and proper carbofuran levels included. Soil moisture was adjusted to above 30%. Vessels were harvested in triplicate at 0, 14, 21, 28, 35, 49, and 63 days after carbofuran addition. The soil samples recovered from each vessel were separately extracted with equal volumes of ethylacetate, and the extracts were analyzed by gas chromatographic procedures using alkali flame ionization detection. The averages of the data from Soils A, B, and C are presented in Tables 24, 26, and 27, respectively.

Loss of non-coated carbofuran from Soil A occurred rapidly during the first 14 day sampling period and continued to near exhaustion (2 ppm) of the material after 63 days. The two coated preparations showed no appreciable degradation during the course of the experiment.

A parallel experiment to determine the amount of material released from the granule showed 23.8%

44

and 16.5% of the total amount available (23,500 µg and 23,250 µg) was released in 56 days from the 8 and 10 pph coatings respectively (Table 25).

TABLE 24

Average amount (ppm) of carbofuran recovered from a field collected soil (Soil A) with a known history of successive previous carbofuran treatments for more than three years before this test

| Sampling day | ppm recovered | | | % of theory recovered | | |
|---|---|---|---|---|---|---|
| | 10G (noncoated) | 10 pph | 8 pph (coated) | 10G | 10 pph | 8 pph |
| 0 | 448 | 319 | 397 | 89.6 | 70.1 | 81.9 |
| 14 | 223 | 410 | 390 | 44.6 | 90.1 | 80.4 |
| 21 | 122 | 321 | 395 | 24.4 | 70.5 | 81.4 |
| 28 | 54 | 362 | 333 | 10.8 | 79.6 | 68.7 |
| 35 | 18 | 418 | 401 | 3.6 | 91.9 | 82.7 |
| 49 | 5 | 431 | 338 | 1.0 | 94.7 | 69.7 |
| 63 | 2 | 312 | 358 | 0.4 | 65.6 | 73.8 |

TABLE 25

Determination of the amount of carbofuran released from controlled-release samples during the indicated test period in water soak extraction

| Initial level | Sample | | | | |
|---|---|---|---|---|---|
| | 8 pph (9.4%) 23,500 µg | | 10 pph (9.3%) 23,250 µg | | |
| Days | µg released per sample period | % release/ day | µg released per sample period | % release/ day | |
| 1 | 164.5 | 0.7 | 209.3 | 0.9 | |
| 2 | 235.0 | 0.5 | 93.0 | 0.4 | |
| 7 | 587.5 | 0.5 | 581.3 | 0.5 | |
| 14 | 822.5 | 0.5 | 651.0 | 0.4 | |
| 22 | 940.0 | 0.5 | 744.0 | 0.4 | |
| 28 | 705.0 | 0.5 | 418.5 | 0.3 | |
| 35 | 658.0 | 0.4 | 325.5 | 0.2 | |
| 42 | 658.0 | 0.4 | 325.5 | 0.2 | |
| 49 | 493.5 | 0.3 | 325.5 | 0.2 | |
| 56 | 329.0 | 0.2 | 162.8 | 0.1 | |
| Total | 5593.0 | 23.8 | 3836.4 | 16.5% | |

In Soil B a longer induction period was evident before significant amounts of non-coated carbofuran began to disappear. After 28 days, carbofuran was being metabolized at about the same rate as shown in Soil A after less than 14 days. As in Soil A, no appreciable disappearance of carbofuran had occurred from the two coated formulations.

In Soil C an even longer induction period was required before signficant amounts of non-coated carbofuran began to disappear, but once disappearance started, as in Soil B, the rate of disappearance was about the same as in Soil A. Again, as before, the coated granules showed no loss of carbofuran.

TABLE 26

Average amount (ppm) of carbofuran recovered from a field collected Soil B with a known history of microbiological degradation of carbofuran, with previous exposure to successive carbofuran treatments but exposure having ceased three years before this test

| Sampling day | ppm recovered | | | % of theory recovered | | |
|---|---|---|---|---|---|---|
| | 10G | 10 pph | 8 pph | 10G | 10 pph | 8 pph |
| 0 | 446 | 397 | 438 | 89.2 | 87.3 | 90.3 |
| 14 | 389 | 378 | 367 | 77.8 | 83.1 | 75.7 |
| 22 | 438 | 336 | 365 | 87.6 | 73.8 | 75.3 |
| 28 | 383 | 300 | 345 | 76.6 | 65.9 | 71.1 |
| 35 | 362 | 325 | 386 | 72.4 | 71.4 | 79.6 |
| 50 | 232 | 350 | 325 | 46.4 | 76.9 | 67.0 |
| 63 | 70 | 276 | 387 | 14.0 | 60.7 | 79.8 |

TABLE 27

Average amount (ppm) of carbofuran recovered from a field collected Soil C with no known previous carbofuran exposure

| Sampling day | ppm recovered | | | % of theory recovered | | |
|---|---|---|---|---|---|---|
| | 10G | 10 pph | 8 pph | 10G | 10 pph | 8 pph |
| 0 | 436 | 336 | 362 | 87.2 | 73.8 | 74.6 |
| 14 | 320 | 363 | 331 | 64.0 | 79.8 | 68.2 |
| 21 | 397 | 355 | 405 | 79.4 | 78.0 | 83.5 |
| 28 | 290 | 272 | 346 | 58.0 | 59.8 | 71.3 |
| 35 | 195 | 276 | 397 | 39.0 | 60.7 | 81.9 |
| 49 | 61 | 401 | 374 | 12.2 | 88.1 | 77.1 |
| 69 | 49 | 299 | 307 | 9.8 | 65.7 | 63.3 |

Example 16

Protection of avian species from the toxic effects of carbofuran when ingesting a granule formulation of the active ingredient, by coating carbofuran granules with a slow release coating

Carbofuran granular formulations have had to be buried below the surface of the soil if one were to prevent the poisoning of birds, which pick up the granular particles as food. Incorporation into the seed furrow, a side dress drilling or broadcast incorporation, all require specialized equipment, more energy, and generally cost more to apply when compared to a surface application. And, even with these precautions, avian poisoning has still occurred.

The present invention makes it possible to formulate a carbamate agent so as to release the agent only very slowly or not at all initially, and then more rapidly in a controlled manner after the passing of one or two days. This control of release is achieved in spite of the amount of water present.

Coated granules were prepared according to Example 2 above, such that coating levels of 2 pph or 14 pph were applied to commercial carbofuran 10G granules. An amount of the coated and a commercial non-coated granules were added to the feed to prepare stock supplies of chick feed (0.25% 10G commercial non-coated; 0.26% 10G coated with 2 pph; and 0.29% 10G coated with 14 pph). The mixtures were fed as a

46

standard chick ration and fed to different groups of chicks, 5 chicks per group, all of the same age. After 6 days, the chicks were weighed and the food consumption measured.

It was found that weight gain, compared to the untreated chicks, was depressed 45% by the non-coated treatment, and 30% by the 2 pph coated treatment. However, a 5% weight gain was shown by the chicks eating the 14 pph coated granules. The amount of feed consumed by these three groups was decreased by 26%, 20%, and 0%, respectively. The average amount of toxicant consumed per chick for the six day period was 37.0 mg., 40.3 mg., and 50.0 mg. for the non-coated, 2 pph, and 14 pph coating levels respectively. The conversion of these values to mg. of active ingredient consumed per kg of body weight shows that 48% more active ingredient was consumed by the birds fed the 14 pph coated formulation. These data, summarized in Table 28, clearly show that an increase in safety from the toxic effects of carbofuran is achieved by the resin coating of this invention.

TABLE 28

Determination of the response of two-week old chicks (Arbor Acres-Van Tress cross) to ingestion of coated and non-coated commercial carbofuran 10G incorporated into their diet for six days. The feed contained 0.25% 10G, 0.26% 10G coated with 2 parts per hundred (pph) resin coating and 0.29% 10G coated with 14 pph. The various samples were admixed in a standard chick ration fed to groups of chicks (5 chicks/group)

| Treatment | Group weight (g) | | | % of control | Total feed consumed per 5 chick group | % of control | Average amount consumed/chick in 6 days | | | % of non-coated |
| | days | | Gain wt. | | | | Feed (g) | mg active ingredient | mg/kg | |
| | 0 | 6 | | | | | | | | |
| None | 221 | 298 | 77 | (100) | 1000 | (100.0) | 200[1] | 0.0 | 0 | 0.0 |
| 10G alone | 231 | 273 | 42 | 55 | 740 | 74.0 | 148 | 37.0 | 678 | (100.0) |
| 10G+2 pph | 240 | 294 | 54 | 70 | 803 | 80.3 | 161 | 40.3 | 685 | 101.0 |
| 10G+14 pph | 229 | 310 | 81 | 105 | 1000[1] | 100.0 | 200 | 50.0 | 1008 | 149.0 |

[1] All feed was consumed during the experimental period, and no feed was left by 5th or 6th day.

Example 17

Protecting plant tissue from phytotoxic levels of systemic insecticide

Carbofuran is used widely in forest transplant and Christmas tree plantings for insect control. Application of the commercially available 10G granular product is made into the transplanting hole as the plant is placed into it. With the commercial 10G it is not feasible to use more than about 0.5 grams active ingredient per transplant hole, for higher rates cause phytotoxicity in the form of reduced growth or plant death.

The present invention makes it possible to so formulate a carbamate agent as to enable safe placement of larger amounts of active ingredient in the transplant hole than is safe with the commercially available 10G. These larger amounts of coated carbofuran do not impair plant vigor, and use of these higher rates of controlled release material give extended insect control periods.

Coated granules were prepared according to Example 2 above, such that a coating level of 14 pph was applied to commercial carbofuran 10G granules. An amount of coated granules were added to each transplant hole to give active ingredient rates of 0.5, 1.0, and 1.5 grams. A commercial 10G rate of 0.5 gram active ingredient and an untreated sample were used for comparison. Insect control counts were made on the nantucket tip moth. A percent infestation for each treatment was obtained by counting infested terminals. Additionally, ground line diameter and height measurements were made on the young trees after one season's growth.

The insect control obtained *initially* from coated granule treatment was better than the non-coated at all rates. However, at the second counting time the highest rate of the coated teratment was superior to the others. At the end of the season the highest coated rate was still numerically superior to all other treatments. At the end of the growing season tree height and trunk ground line diameter (GLD) were measured. All treatments showed greater tree height than the untreated check. The GLD was increased slightly over the check by the non-coated treatment, but the control treatments all increased the GLD 45% or more over the check treatment. This evidence, coupled with visual observation showed a clear reduction of phytotoxicity in the transplanted pine tree seedlings.

The results are summarized: Tables 29 and 30

TABLE 29

Response by transplanted pine tree seedlings to coated and non-coated carbofuran granule treatments placed into the seedling transplant hole, showing the average height and ground line diameter at the end of the first growing season

| Treatment | Rate (g) a.i./plant | Seedling | | |
|---|---|---|---|---|
| | | | Ground line diameter | |
| | | Height (cm) | (mm) | % increase over check |
| Untreated | 0.0 | 37 | 75 | (100) |
| Carbofuran 10G | 0.5 | 46 | 86 | 15 |
| Carbofuran 10G+14 pph | 0.5 | 44 | 109 | 45 |
| Carbofuran 10G+14 pph | 1.0 | 45 | 111 | 48 |
| Carbofuran 10G+14 pph | 1.5 | 46 | 109 | 45 |

49

# 0 079 668

## TABLE 30

Average percent nantucket pine tipmoth (*Rhyacionia frustrana*) infested terminals determined on three different dates in the same season

| Treatment | Rate (g) a.i./plant | Percent terminals infested on indicated date | | |
|-----------|---------------------|------|------|-------|
| | | 7/16 | 8/31 | 10/19 |
| Untreated | 0.0 | 45.5a | 28.5a | 52.9n.s. |
| Carbofuran 10G | 0.5 | 10.1b | 10.3bc | 39.2 |
| Carbofuran 10G+14 pph | 0.5 | 1.9bc | 32.1a | 46.1 |
| Carbofuran 10G+ 4 pph | 1.0 | 0.0c | 10.8bc | 34.3 |
| Carbofuran 10G+14 pph | 1.5 | 0.0c | 3.0c | 23.3 |

In conclusion, the present invention provides a composite discrete particle adapted to provide controlled release of active pesticide ingredient when in contact with water, comprising:

a pesticide-containing solid care,

said pesticide being present in an amount effective in control a pest intended to be killed or inhibited, as released from said particle under controlled release conditions, and

a membrane-like coating over said core and comprising at least one layer of an adduct of a conjugated diene and an approximately stoichiometric amount of multiply unsaturated fatty acid radicals,

said fatty acid radicals being provided by a lipid and having sufficient unsaturation to form an adduct with said diene and to cure by reaction with oxygen,

said membrane-like coating being present in sufficient amount to provide controlled release of said pesticide when in use. Advantageously, said diene is chosen from the group consisting of dicyclopentadiene, furan, methyl dicyclopentadiene, styrene, α-methyl styrene, butadiene, and liquid polybutadiene. Preferably, said lipid is an ester of such fatty acid radicals and an alcohol chosen from the group consisting of glycerol, pentaerythritol, sorbitol, trimethylol propane, trimethylol ethane, inositol and 2,2,6,6 tetramethylolcyclohexanol, such as a fatty acid triglyceride. The lipid may be chosen from the group consisting of linseed oil, soybean oil, maleinized soybean oil, maleinized tall oil, fish oil, safflower oil, sunflower oil, walnut oil, tung oil, dehydrated caster oil and oiticica oil.

The core may advantageously be a pre-formed granule chosen from the group consisting of attapulgite clay, ground corn cobs, silica sand and kaolin, and in a preferred aspect may contain fertilizer. The pesticide can be an insecticide, such as a carbamate or organophosphorus insecticide, an herbicide, such as thiocarbamate herbicide, a fungicide, a nematicide, such as an organophosphorus nematicide, or a growth regulator. In one aspect of the invention, said pesticide is a synthetic pyrethroid.

In a preferred aspect the invention also provides a composite discrete particle adapted to provide controlled-release of active pesticide ingredient when in contact with water, comprising:

a solid base core,

pesticide associated with said core to form a pesticide-containing core,

said pesticide being present in an amount effective to control a pest intended to be killed or inhibited, as released from said particle under controlled conditions, and

a membrane-like coating over said pesticide-containing core and comprising at least one layer of an adduct of a conjugated diene and an approximately stoichiometric amount of fatty acid radicals,

said fatty acid radicals being provided by a lipid and having sufficient unsaturation to form the adduct with said diene and to cure by reaction with oxygen,

said coating being present in sufficient amount to provide controlled release of said pesticide when in use. The base core may be a particle chosen from the group consisting of granules or particles of fertilizer, pesticide, attapulgite, corn cobs, quartz sand, kaolin and vermiculite.

The pesticide is preferably selected from the group consisting of carbofuran, molinate, malathion, fenamiphos, EPTC, carboxin, acephate, disulfotone, oxydemetonmethyl, fluvalinate, monochlorophenoxy acetic acid, bifenox, fenvalverate, butachlor, thiobencarb, BTI-protein toxin, perfluidone, permethrin, aldicarb, and dicamba and the composite particle preferably contains at least two different pesticides selected from this group.

50

A further preferred aspect of the invention provides a composite discrete particle adapted to provide controlled release of active pesticide ingredient when in contact with water, comprising:

a pesticide-containing solid core,

said pesticide being present in an amount effective to control a pest intended to be killed or inhibited, as released from said particle under controlled release conditions, and being chosen from the group consisting of carbofuran, molinate, molinate mixed with monochlorophenoxy acetic acid, and malathion, and

a membrane-like coating over said core and comprising at least one layer of an adduct of a conjugated diene and an approximately stoichiometric amount of fatty acid radicals,

said fatty acid radicals being provided by a lipid and having sufficient unsaturation to form an adduct with said diene and to cure by reaction with oxygen,

said coating being present in sufficient amount to provide controlled release of said pesticide in use. The fatty acid radicals are advantageously those of the fatty acids selected from the group consisting of linoleic, linolenic, eleostearic, licanic, arachiodonic, and clupanodonic acids and mixtures of those acids with each other.

A still further preferred aspect of the invention provides a composite discrete particle adapted to provide controlled release of active pesticide ingredient when in contact with water, comprising:

a pesticide-containing solid core,

said pesticide being present in an amount effective to control a pest intended to be killed or inhibited under controlled release conditions, and

a coating over said core and comprising at least one layer of approximately stoichiometric proportion of a copolymer of dicyclopentadiene and a triglyceride of unsaturated fatty acid having sufficient unsaturation to react with dicyclopentadiene and to dry by reaction with oxygen,

there being a total of from about 2% to about 30% of said coating. Preferably, there is about 30% to 35% dicyclopentadiene and about 70% to 55% of said triglyceride. Advantageously, said core includes at the centre of the core a fertilizer granule coated with a said coating. The pesticide may be chosen from the group consisting of carbamate, thiocarbamate, and organophosphorous pesticides. Also, said triglyceride may be selected from a group consisting of linseed oil, maleinized soybean oil, maleinized tall oil, fish oil, safflower oil, sunflower oil, walnut oil, a mixture of linseed oil and soybean oil, tuna oil, dehydrated caster oil, oiticica oil and mixtures of the members of the group with each other. Preferably, said coating is applied successively as a plurality of layers, each said layer being dried and cored as applied.

In a preferred aspect, the invention also provides a composite discrete particle adapted to provide controlled release of active pesticide ingredient when in contact with water, comprising:

a pesticide-containing said core,

said pesticide being present in an amount effective to control a pest intended to be killed or inhibited under controlled release conditions, and

a coating over said core and comprising at least one layer of a copolymer of 38% by weight dicyclopentadiene and 62% by weight of a triglyceride of unsaturated fatty acid, said triglyceride having sufficient unsaturation to react with dicyclopentadiene and to dry by reaction with oxygen,

there being a total of from about 2% to about 30% of said coating,

said pesticide being chosen from the group consisting of carbofuran, molinate and malathion. The glyceride may, for example, comprise linseed oil, maleinized soybean oil or from about 40% to 100% by weight linseed oil and from 0% to about 60% by weight soybean oil.

The present invention also provides a composite discrete particle adapted to provide controlled release of active pesticide ingredient when in contact with water, comprising:

a formed core containing carbofuran in an amount effective to control insects intended to be killed or inhibited under controlled release conditions, and

a coating over said core and comprising at least one layer of a copolymer of approximately stoichiometric amounts of dicyclopentadiene and a triglyceride of unsaturated fatty acid having sufficient unsaturation to react with dicyclopentadiene and to dry by reaction with oxygen,

there being a total of from about 2% to about 30% of said coating. Preferably said core includes as a central particle thereof a granule comprising a fertilizer coated with a said coating. Advantageously there are a plurality of layers of said coating.

In a still further preferred aspect of the invention, there is provided a composite discrete particle adapted to provide controlled release of active pesticide ingredient when in contact with water, comprising:

a solid core containing malinate present in an amount effective to effect weed control under controlled release conditions, and

a coating over said core and comprising at least one layer of a copolymer of approximately stoichiometric amounts of dicyclopentadiene and a triglyceride of unsaturated fatty acid having sufficient unsaturation to react with dicyclopentadiene and to dry by reaction with oxygen,

there being a total of from about 6% to about 30% of said coating. Preferably, the particle has a plurality of layers of said coating. Advantageously, the particle has additional pesticide on the outside of said coating and enclosed in another coating layer of the same said coating material.

51

The invention also provides a composite discrete particle adapted to provide controlled release of active pesticide ingredient when in contact with water, comprising:

a formed core containing malathion in an amount effective to control insects under controlled release conditions, and

a coating over said core and comprising at least one layer of a copolymer of approximately stoichiometric amounts of dicyclopentadiene and a triglyceride of unsaturated fatty acid having unsaturation to react with dicyclopentadiene and to dry by reaction with oxygen,

there being a total from about 2% to about 30% of said coating. Preferably, the particle has a plurality of layers of said coating.

The present invention also provides a method of killing insects on growing plants without damage to such plants, comprising placing an soil adjacent to said plants coated, controlled-release carb-furan-containing granules, said granules each bearing from 2% to 30% of a coating resin which is a copolymer of 38% dicyclopentadiene and 62% by weight, unsaturated fatty oil or glyceride of unsaturated fatty acid which has sufficient unsaturation to react with said dicyclopentadiene and to dry by reaction with oxygen, said granules being implanted in amount sufficient to kill infesting insects under controlled release conditions. Preferably, said granules are implanted in an amount to provide from about 0.6 to about 22.4 Kg active ingredient per hectare (from about 0.5 to about 20 pounds active ingredient per acre) of seeded area.

In a preferred aspect, the invention provides a method for controlling weeds in rice fields comprising flooding a rice paddy with water, seeding rice into said paddy, feeding into said paddy, adjacent said rice, controlled-release granules containing molinate or thiobencarb active ingredient and each such granule being coated with from 2% to 30% by weight of a copolymer of 38% dicyclopentadiene and 62% by weight of a glyceride of an unsaturated fatty acid, such fatty acid having sufficient unsaturation to react with said dicyclopentadiene and to dry by reaction with oxygen, said granules being added in an amount to control weed growth in said paddy. Advantageously, said granules are added in an amount of from about 22.4 to about 112 Kg per seeded hectare (from about 20 to about 100 lbs. per seeded acre).

The invention also provides a method for controlling weeds in rice fields comprising feeding into said rice field, prior to flooding with water, an effective amount of controlled release granules containing molinate or thiobencarb to control said weeds, each such granule being coated with from 2% to 30% by weight of a copolymer of 38% dicyclopentadiene and 62% of a glyceride of an unsaturated fatty acid having sufficient unsaturation to react with said dicyclopentadiene and to dry by reaction with oxygen. The said granules are preferably added in an amount of from about 22.4 to about 112 Kg per seeded hectare (from about 20 to about 100 lbs. per seeded acre).

The invention further provides a method for controlling weeds in rice fields comprising flooding a rice paddy with water, seeding rice into said paddy, feeding into said paddy controlled-release granules containing molinate or thiobencarb active ingredient and each such granule being coated with from 2% to 30% by weight of a copolymer of 38% dicyclopentadiene and 62% by weight of a glyceride of an unsaturated fatty acid, such fatty acid having sufficient unsaturation to react with said dicyclopentadiene and to dry by reaction with oxygen, said granules being added in an amount to control weed growth in such paddy, and then seeding rice into said paddy. The said granules are advantageously added in an amount of from about 22.4 to about 112 Kg per seeded hectare (from about 20 to about 100 lbs. per seeded acre).

The invention still further provides a method for killing or inhibiting over an extended period of time insects and larvae which live in water and which are harmful to plant life, which comprises introducing into the watery areas containing such insects and larvae composite controlled-release granules consisting essentially of a core containing from 0.06% to 10% by weight based on the weight of said core of malathion and a coating over said core of at least one layer of a resinous copolymer of about 38% dicyclopentadiene and 62% of a glyceride of unsaturated fatty acid having sufficient unsaturation to react with said dicyclopentadiene and to dry by reaction with oxygen.

A further preferred aspect of the invention provides a method of preparing composite granules adapted to slow or controlled release of pesticide in contact with water, comprising:

providing a tumbling mass of core particles in a treating zone,

applying to such mass a solution of an effective amount of a pesticide in an organic solvent, then drying,

slowly adding to said treated core particles containing said pesticide an amount of a solution in a volatilizable organic solvent of a copolymer of about 38% by weight dicyclopentadiene and about 62% by weight linseed oil or maleinized soybean oil to provide an initial layer of such copolymer coating said treated core particles, drying and curing said copolymer.

repeating such addition of said solution of copolymer at least once, and drying and curing to form coated composite granules. The initial layer preferably provides from 2% to 4% by weight of said copolymer. The total coating preferably comprises from about 2% to about 30% by weight of said copolymer. The pesticide may be at least one member chosen from the group consisting of carbofuran, molinate, malathion, thiobencarb, fenamiphas, EPTC, carboxin, acephate, disulfotone oxydemetonmethyl, fluvalinate, monochlorophenoxy acetic acid, bifenox, fenvalerate, butachlor, bacillus thuringiensis israeliensis, perfluodone, permethrin, aldicarb and dicamba. Advantageously, said pesticide is carbofuran and is provided in an amount of from about 0.06% to about 10% by weight based on the weight of said core. Alternatively, said pesticide may be molinate provided in an amount of from 0.0% to 20% or malathion provided in amount of from 0.1% to 20%.

In a further preferred aspect of the present invention, there is provided a method of preparing composite granules adapted to provide slow or controlled release of pesticide in agricultural use, comprising:

providing in a treating zone a tumbling mass of first-pesticide-containing granules having an effective amount of a first pesticide,

slowly adding to said granules an amount of a copolymer of an adduct of a conjugated diene and a triglyceride of a fatty acid having sufficient unsaturation to react with said diene and to dry by reaction with oxygen, and drying to form coated, first-pesticide-containing granules,

said amount of copolymer being sufficient to provide such slow or controlled release,

applying to said coated granules an effective amount of a second pesticide in solution in an organic solvent,

drying said solution of said second pesticide to form granules having multiple pesticides,

slowly adding to such multiple-pesticide-containing granules in said treating zone a further amount of said copolymer, to form coated, multiple-pesticide-containing granules, drying and curing. The said coatings are preferably added in a total amount of from 2% to about 30%, based on the weight of the granules. Advantageously, said first pesticide is molinate and said second pesticide is MCPA or said first pesticide is molinate and said second pesticide is carbofuran.

A further preferred method in accordance with the invention comprises a method for controlling pests in agricultural growing areas, comprising feeding into growing areas controlled-release granules containing an effective amount of pesticide to kill or inhibit such pests, each such granules having a coating of from 2% to 30% by weight of a copolymer of 38% dicyclopentadiene and 62%, by weight, of a triglyceride of a fatty acid having sufficient unsaturation to react with said dicyclopentadiene and to dry by reaction with oxygen, there being fed a plurality of diverse granules having differing amounts of such coating to provide extended release profiles of said pesticide in use. Advantageously, said plurality of granules consists essentially of 25 to 50% of granules having 6% of such coating, 25% to 50% of granules having 12% of such coating and 25% to 50%, by weight, of granules having 18% of such coating. The said granules may be fed into a rice growing area prior to flooding said area with water. Alternatively, said granules may be fed into a rice paddy after flooding said paddy with water. The pesticide may, for example, be molinate or thiobencarb. The said diverse granules preferably comprise a mixture of such granules containing Bolero and such granules containing molinate.

The present invention also provides, in a method for growing rice in paddies wherein the paddies contain substantial amounts of water and rice is seeded into such paddies, the process of controlling or inhibiting the growth of pests in such paddies by adding thereto an effective amount of granules consisting essentially of a core, associated with said core a pesticide to kill or control said pests, and a coating comprising a plurality of layers of a cured copolymer of about 38% by weight dicyclopentadiene and about 62% by weight linseed oil or maleinized soybean oil. The pesticide may, for example, be a herbicide effective against weeds or an insecticide effective against rice infesting insects.

A further preferred aspect of the invention provides a method for controlling mosquito infestation in watery areas comprising adding to such areas an effective amount of granules consisting essentially of a core, an effective amount of malathion on said core, and a coating over said malathion and said core comprising a plurality of layers of a cured copolymer of about 38% by weight dicyclopentadiene and 62% by weight linseed oil or maleinized soybean oil.

The invention still further provides a method for making a composite granule adapted to provide controlled release of active pesticide when in contact with water, comprising:

applying to a solid core particle a solution in an organic solvent of a pesticide in an amount sufficient to control a pest intended to be killed or controlled under controlled release conditions,

volatilizing said solvent so that said pesticide remains deposited over said core particle,

applying over said core particle and said deposited pesticide at least one layer of a copolymer of approximately stoichiometric amounts of dicyclopentadiene and a triglyceride of unsaturated fatty acid having sufficient unsaturation to react with said dicyclopentadiene and to dry by reaction with oxygen, and drying

drying and curing said copolymer at about 140°F. to about 160°F. to form said composite granule. The said solution advantageously contains from about 20% to about 80% non-volatiles.

The invention also provides a method for controlling pests in agricultural growing areas utilizing a pesticide subject to micro-biological degradation, comprising applying to growing areas controlled-release granules containing an effective amount of pesticide to kill or inhibit such pests, each such granules having a coating of from 2% to 30% by weight of a copolymer of 38% dicyclopentadiene and 62%, by weight, of a triglyceride of a fatty acid having sufficient unsaturation to react with said dicyclopentadiene and to dry by reaction with oxygen, as well as a method for controlling pests over an extended period of time with a single application made at the time of transplanting a plant in a hole, comprising implanting into the hole at the time of transplanting, controlled-release granules containing an effective amount of pesticide to kill or inhibit such pests, each such granules having a coating of from 2% to 30% by weight of a copolymer of 38% dicyclopentadiene and 62%, by weight, of a triglyceride of a fatty acid having sufficient unsaturation to

**0 079 668**

react with said dicyclopentadiene and to dry by reaction with oxygen, and then filling said hole with soil. Also, the invention provides a method of protecting growing plants from pests while preventing damage to avian to tend to eat pesticide granules, comprising placing on soil adjacent to said plants coated, controlled-release pesticide-containing granules, said granules each bearing from 2% to 30% of a coating resin which is a copolymer of 38% dicyclopentadiene and 62%, by weight, unsaturated fatty oil or glyceride of unsaturated fatty acid which has sufficient unsaturation to react with said dicyclopentadiene and to dry by reaction with oxygen, said granules being implanted in amount sufficient to kill infesting insects under controlled release conditions, and also a method of controlling insects with carbofuran over a long time period on growing plants without damage to such plants while also protecting the carbofuran from microbiological degradation, comprising placing on or in the soil adjacent to said plants, coated, controlled-release carbofuran-containing granules, said granules each bearing from 2% to 30% of a coating resin which is a copolymer of 38% dicyclopentadiene and 62%, by weight, unsaturated fatty oil or glyceride of unsaturated fatty acid which has sufficient unsaturation to react with said dicyclopentadiene and to dry by reaction with oxygen, said granules being implanted in amount sufficient to kill infesting insects under controlled release conditions. In the last mentioned method, said granules are preferably implanted in an amount to provide from about 0.6 to about 22.4 Kg active ingredient per hectare of seeded area (from about 0.5 to about 20 pounds active ingredient per acre of seeded area).

## Claims

1. A composite discrete particle adapted to provide controlled release of active pesticide ingredient when in contact with water, which particle comprises a pesticide-containing solid core, the pesticide being present in an amount effective to control a pest intended to be killed or inhibited, as released from the particle under controlled release conditions, and a coating over the core and comprising at least one layer of an adduct or copolymer of a conjugated diene and an approximately stoichiometric amount of unsaturated fatty acid radicals, the fatty acid radicals being provided by a lipid and having sufficient unsaturation to form an adduct with the diene and to cure by reaction with oxygen, the membrane-like coating being present in sufficient amount to provide controlled release of the pesticide when in use.

2. A composite particle according to Claim 1, wherein the diene is selected from dicyclopentadiene, furan, methyl dicyclopentadiene, styrene, α-methyl styrene, butadiene and liquid polybutadiene and/or the lipid is an ester of such fatty acid radicals and an alcohol selected from glycerol, pentaerythritol, sorbitol, trimethylol propane, trimethylol ethane, inositol and 2,2,6,6, tetramethylolcyclohexanol.

3. A composite particle according to Claim 2, wherein the diene is dicyclopentadiene and the lipid is a fatty acid triglyceride.

4. A composite particle according to Claim 1, 2 or 3, wherein the lipid is selected from linseed oil, soybean oil, maleinized soybean oil, maleinized tall oil, fish oil, safflower oil, sunflower oil, walnut oil, tung oil, dehydrated castor oil and oiticica oil.

5. A composite particle according to any one of the preceding claims, wherein the core contains fertilizer.

6. A composite particle according to any one of the preceding claims, wherein said core is a pre-formed granule chosen from the group consisting of attapulgite clay, ground corn cobs, silica sand and kaolin.

7. A composite particle according to any one of the preceding claims, wherein said pesticide is a carbamate insecticide, a thiocarbamate herbicide, an organophosphorus insecticide or nematocide or a synthetic pyrethroid.

8. A composite particle according to any one of the preceding claims, wherein the pesticide is selected from carbofuran, molinate, malathion, fenamiphos, EPTC, carboxin, acephate, disulfotone, oxydemetonmethyl, fluvalinate, monochlorophenoxy acetic acid, bifenox, fenvalerate, butachlor, thiobencarb, BTI-protein toxin, perfluidone, permethrin, aldicarb and dicamba.

9. A composite particle according to Claim 8, wherein the composite particle contains at least two different specified pesticides.

10. A composite particle according to any one of the preceding claims, wherein the fatty acid radicals are those of the fatty acids selected from linoleic, linolenic, eleostearic, licanic, arachidonic, and clupanodonic acids and mixtures of two or more of these acids with each other.

11. A discrete particle according to Claim 1, wherein the coating comprises at least one layer of approximately stoichiometric proportion of a copolymer of dicyclopentadiene and a triglyceride of unsaturated fatty acid having sufficient unsaturation to react with dicyclopentadiene and to dry by reaction with oxygen, there being a total of from 2% to 30% by weight of the core of the coating.

12. A composite particle according to Claim 11, wherein the coating comprises from 30% to 35% of dicyclopentadiene and from 70% to 55% of the triglyceride.

13. A discrete particle according to Claim 11, wherein the coating comprises at least one layer of a copolymer of about 38% by weight dicyclopentadiene and about 62% by weight of a triglyceride of unsaturated fatty acid, the triglyceride having sufficient unsaturation to react with dicyclopentadiene and to dry by reaction with oxygen, there being a total, by weight of the core, of from 2% to 30% of the coating, the pesticide being selected from carbofuran, molinate and malathion.

54

14. A composite particle according to Claim 13, wherein the glyceride comprises from 40% to 100% by weight of linseed oil and from 0% to 60% by weight of soybean oil.

15. A composite particle according to Claim 1, wherein the pesticide containing solid core comprises a formed core containing carbofuran in an amount effective to control insects intended to be killed or inhibited under controlled release conditions, and wherein the coating over the core comprises at least one layer of a copolymer of approximately stoichiometric amounts of dicyclopentadiene and a triglyceride of unsaturated fatty acid having sufficient unsaturation to react with dicyclopentadiene and to dry by reaction with oxygen, there being a total, by weight of the core, of form 2% to 30% of the coating.

16. A composite particle according to Claim 1, wherein the pesticide containing solid core comprises a solid core containing molinate present in an amount effective to effect weed control under controlled release conditions, and wherein the coating over the core comprises at least one layer of a copolymer of approximately stoichiometric amounts of dicyclopentadiene and a triglyceride of unsaturated fatty acid having sufficient unsaturation to react with dicyclopentadiene and to dry by reaction with oxygen, there being a total, by weight of the core, of from 6% to 30% of the coating.

17. A composite particle according to Claim 1, wherein the pesticide containing solid core comprises a formed core containing malathion in an amount effective to control insects under controlled release conditions, and wherein the coating over the core comprises at least one layer of a copolymer of approximately stoichiometric amounts of dicyclopentadiene and a triglyceride of unsaturated fatty acid having sufficient unsaturation to react with dicyclopentadiene and to dry by reaction with oxygen, there being a total, by weight of the core, from 2% to 30% of the coating.

18. A method of killing insects on growing plants without damage to such plants, which method comprises placing on soil adjacent to the plants coated, controlled-release carbofuran-containing granules, the granules each bearing from 2% to 30% of a coating resin which is a copolymer of about 38% dicyclopentadiene and about 62%, by weight, unsaturated fatty oil or glyceride of unsaturated fatty acid which has sufficient unsaturation to react with the dicyclopentadiene and to dry by reaction with oxygen, the granules being implanted in an amount sufficient to kill infesting insects under controlled release conditions.

19. A method according to Claim 18, wherein the granules are implanted in an amount to provide from 0.5 to 20 pounds active ingredient per acre of seeded area (0.6—22 Kg/hectare).

20. A method of controlling weeds in rice fields which method comprises feeding into a rice paddy flooded with water and seeded with rice, adjacent the rice, controlled-release granules containing molinate or thiobencarb active ingredient and each such granule being coated with from 2% to 30% by weight of a copolymer of about 38% dicyclopentadiene and about 62% by weight of a glyceride of an unsaturated fatty acid, such fatty acid having sufficient unsaturation to react with the dicyclopentadiene and to dry by reaction with oxygen, the granules being added in an amount to control weed growth in such paddy.

21. A method of controlling weeds in rice fields, which method comprises feeding into the rice field, prior to flooding with water, an effective amount of controlled release granules containing molinate or thiobencarb to control said weeds, each such granule being coated with from 2% to 30% by weight of a copolymer of about 38% dicyclopentadiene and about 62% of a glyceride of an unsaturated fatty acid having sufficient unsaturation to react with the dicyclopentadiene and to dry by reaction with oxygen.

22. A method according to Claim 20 or 21, wherein the granules are added in an amount of from 20 to 100 pounds per seeded acre (22—112 Kg/hectare).

23. A method of killing or inhibiting over an extended period of time insects and larvae which live in water and which are harmful to plant life, which method comprises introducing into the watery areas containing or liable to contain such insects and larvae composite controlled-release granules consisting essentially of a core containing from 0.06% to 10% by weight based on the weight of the core of malathion and a coating over the core of at least one layer of a resinous copolymer of about 38% dicyclopentadiene and about 62% of a glyceride of unsaturated fatty acid having sufficient unsaturation to react with the dicyclopentadiene and to dry by reaction with oxygen.

24. A method of controlling pests in agricultural growing areas, which method comprises feeding into growing areas controlled-release granules containing an effective amount of pesticide to kill or inhibit such pests, each such granules having a coating of from 2% to 30% by weight of a copolymer of about 38% dicyclopentadiene and about 62%, by weight, of a triglyceride of a fatty acid having sufficient unsaturation to react with the dicyclopentadiene and to dry by reaction with oxygen, there being fed a plurality of diverse granules having differing amounts of such coating to provide extended release profiles of the pesticide in use.

25. A method of controlling pests over an extended period of time with a single application made at the time of transplanting a plant in a hole, which method comprises implanting into the hole at the time of transplanting, controlled-release granules containing an effective amount of pesticide to kill or inhibit such pests, each such granules having a coating of from 2% to 30% by weight of a copolymer of about 38% dicyclopentadiene and about 62%, by weight, of a triglyceride of a fatty acid having sufficient unsaturation to react with said dicyclopentadiene and to dry by reaction with oxygen, and then filling said hole with soil.

26. A method of controlling pests in agricultural growing areas utilizing a pesticide subject to microbiological degradation, which method comprises applying to growing areas controlled-release granules containing an effective amount of pesticide to kill or inhibit such pests, each such granules having a coating of from 2% to 30% by weight of a copolymer of about 38% dicyclopentadiene and about 62%, by weight, of a triglyceride of a fatty acid having sufficient unsaturation to react with the dicyclopentadiene and to dry by reaction with oxygen.

27. A method of preparing composite particles in accordance with Claim 1, which method comprises providing a tumbling mass of core particles in a treating zone, applying to such mass a solution of an effective amount of a pesticide in an organic solvent, then drying, slowly adding to said treated core particles containing said pesticide an amount of a solution in a volatilizable organic solvent of a copolymer of about 38% by weight dicyclopentadiene and about 62% by weight linseed oil or maleinized soybean oil to provide an initial layer of such copolymer coating said treated core particles, drying and curing said copolymer, repeating such addition of said solution of copolymer at least once, and drying and curing to form coated composite granules.

28. A method according to Claim 27, wherein the initial layer provides from 2% to 4% by weight of the copolymer.

29. A method according to Claim 28, wherein such total coating comprises from 2% to 30% by weight of the copolymer.

30. A method according to Claim 27, 28, or 29, wherein the pesticide is carbofuran and is provided in an amount of from 0.06% to 10% by weight based on the weight of the core.

31. A method according to Claim 27, 28 or 29, wherein the pesticide is molinate and is provided in an amount of from 0.0% to 20%.

32. A method according to Claim 27, 28 or 29, wherein the pesticide is malathion and is provided in an amount of from 0.1% to 20%.

33. A method according to Claim 27, 28 or 29, wherein the pesticide is at least one selected from carbofuran, molinate, malathion, thiobencarb, fenamiphos, EPTC, carboxin, acephate, disulfotone oxydemetonmethyl, fluvalinate, monochlorophenoxy acetic acid, bifenox, fenvalerate, butachlor, bacillus thuringiensis israeliensis, perfluodone, permethrin, aldicarb and dicamba.

34. A method of preparing composite particles in accordance with Claim 1, which method comprises providing in a treating zone a tumbling mass of first-pesticide-containing granules having an effective amount of a first pesticide, slowly adding to the granules an amount of a copolymer of an adduct of a conjugated diene and a triglyceride of a fatty acid having sufficient unsaturation to react with the diene and to dry by reaction with oxygen, and drying to form coated, first-pesticide-containing granules, the amount of copolymer being sufficient to provide slow or controlled release of the pesticide, applying to the coated granules an effective amount of a second pesticide in solution in an organic solvent, drying the solution of the second pesticide to form granules having multiple pesticides, slowly adding to such multiple-pesticide-containing granules in the treating zone a further amount of the copolymer, to form coated, multiple-pesticide-containing granules, drying and curing.

35. A method of making a composite particle in accordance with Claim 1, which method comprises applying to a solid core particle a solution in an organic solvent of a pesticide in an amount sufficient to control a pest intended to be killed or controlled under controlled release conditions, volatilizing the solvent so that the pesticide remains deposited over the core particle, applying over the core particle and the deposited pesticide at least one layer of a copolymer of approximately stoichiometric amounts of dicyclopentadiene and a triglyceride of unsaturated fatty acid having sufficient unsaturation to react with the dicyclopentadiene and to dry by reaction with oxygen, and drying and curing the copolymer at a temperature of from 140F to 160F (from 60C to 71C) to form the composite granule.

**Patentansprüche**

1. Diskretes Mischteilchen, welches so beschaffen ist, daß es bei Kontakt mit Wasser für eine kontrollierte Freisetzung von aktivem Pestizidbestandteil sorgt, wobei das Teilchen einen pestizidhaltigen festen Kern hat, wobei das Pestizid, wenn es unter kontrollierten Freisetzungsbedingungen aus dem Teilchen freigesetzt ist, in einer zur Kontrolle eines Schädlings, den man beabsichtigt, zu töten oder zu hemmen, wirksamen Menge vorhanden ist und eine Überzugsschicht über dem Kern aufweist, die wenigstens eine Schicht aus einem Addukt oder Copolymeren eines konjugierten Diens und einer annähernd stöchiometrischen Menge eines ungesättigten Fettsäurerestes aufweist, wobei der Fettsäurerest von einem Lipid geliefert wird und genügend ungesättigt ist, um ein Addukt mit dem Dien zu bilden und durch Reaktion mit Sauerstoff auszuhärten, und wobei die membranähnliche Überzugsschicht in genügender Menge vorhanden ist, um bei Gebrauch für eine kontrollierte Freisetzung des Pestizids zu sorgen.

2. Mischteilchen nach Anspruche 1, wobei das Dien aus Dicyclopentadien, Furan, Methyldicyclopentadien, Styrol, α-Methylstyrol, Butadien und flüssigem Polybutadien ausgewählt ist und/oder das Lipid ein Ester eines solchen Fettsäurerestes und eines Alkohols, ausgewählt aus Glyzerin, Pentaerythrit, Sorbit, Trimethylolpropan, Trimethylolethan, Inosit und 2,2,6,6-Tetramethylolcyclohexanol.

3. Mischteilchen nach Anspruch 2, wobei das Dien Dicyclopentadien und das Lipid ein Fettsäuretriglyzerid ist.

4. Mischteilchen nach Anspruch 1, 2 oder 3, wobei das Lipid aus Leinöl, Sojabohnenöl, maleinisiertem

# 0 079 668

Sojabohnenöl, maleinisiertem Tallöl, Fischöl, Bafloröl, Sonnenblumenöl, Walnußöl, Tungöl, dehydratisiertem Rizinusöl und Oiticicaöl ausgewählt ist.

5. Mischteilchen nach einem der vorangehenden Ansprüche, wobei der Kern Düngemittel enthält.

6. Mischteilchen nach einem der vorangehenden Ansprüche, wobei der besagte Kern ein vorgeformtes Korn ist, welches aus der Gruppe ausgewählt ist, die aus Attapulgit-Ton, geschroteten Maisspindeln, Silikasand und Kaolin besteht.

7. Mischteilchen nach einem der vorangehenden Ansprüche, wobei das besagte Festizid ein Carbamat-Insectizid, ein Thiocarbamat-Herbizid, ein Organophosphor-Insectizid oder -Nematozid oder ein synthetisches Pyrethroid ist.

8. Mischteilchen nach einem der vorangehenden Ansprüche, wobei das Pestizid aus Carbofuran, Molinat, Malathion, Fenamiphos, EPTC, Carboxin, Acephat, Disulfoten, Oxydemetonmethyl, Fluvalinat, Monochlorphenoxyessigsäure, Bifenox, Fenvalerat, Butachlor, Thiobencarb, BTI-Proteintoxin, Perfluidon, Permethrin, Aldicarb und Dicamba ausgewählt ist.

9. Mischteilchen nach Anspruch 8, wobei das Mischteilchen wenigstens zwei verschiedene spezifizierte Pestizide enthält.

10. Mischteilchen nach einem der vorangehenden Ansprüche, wobei die Fettsäurereste von den Fettsäuren, ausgewählt aus Linol-, Linolen-, Eläostearin-, Likan-, Arachidon- und Klupanodonsäuren und Gemischen von zwei oder mehr dieser Säuren miteinander, stammen.

11. Diskretes Teilchen nach Anspruch 1, wobei die Überzugsschicht wenigstens eine Schicht mit einem annähernd stöchiometrischen Anteil eines Copolymers von Dicyclopentadien und einem Triglyzerid einer ungesättigten Fettsäure, die genügend ungesättigt ist, um mit Dicyclopentadien zu reagieren und durch Reaktion mit Sauerstoff zu trocknen, aufweist und insgesamt zwischen 2 und 30 Gew.-% des Kerne ausmacht.

12. Mischteilchen nach Anspruch 11, wobei die Überzugsschicht zwischen 30 und 35% Dicyclopentadien und zwischen 70 und 55% des Triglyzerids aufweist.

13. Diskretes Teilchen nach Anspruch 11, wobei die Überzugsschicht wenigstens eine Schicht aus einem Copolymer von etwa 38 Gew.-% Dicyclopentadien und etwa 62 Gew.-% eines Triglyzerids einer ungesättigten Fettsäure aufweist, wobei das Triglyzerid genügend ungesättigt ist, um mit Dicyclopentadien zu reagieren und durch Reaktion mit Sauerstoff zu trocknen, und insgesamt zwischen 2 und 30%, bezogen auf das Gewicht des Kerns, ausmacht, wobei das Pestizid aus Carbofuran, Molinat und Malathion ausgewählt ist.

14. Mischteilchen nach Anspruch 13, wobei das Glyzerid zwischen 40 bis 100 Gew.-% Leinöl und zwischen 0 und 60 Gew.-% Sojabohnenöl aufweist.

15. Mischteilchen nach Anspruch 1, wobei der pestizidhaltige feste Kern einen geformten Kern aufweist, der Carbofuran in einer zur Kontrolle von Insekten, die man beabsichtigt zu töten oder zu hemmen, unter kontrollierten Freisetzungsbedingungen wirksamen Menge enthält, und die Überzugsschicht über dem Kern wenigstens eine Schicht aus einem Copolymer von annähernd stöchiometrischen Mengen Dicyclopentadien und eines Triglyzerids einer ungesättigten Fettsäure, die ungesättigt genug ist, um mit Dicyclopentadien zu reagieren und durch Reaktion mit Sauerstoff zu trocknen, aufweist und insgesamt zwischen 2 und 30%, bezogen auf das Gewicht des Kerns, ausmacht.

16. Mischteilchen nach Anspruch 1, wobei der pestizidhaltige feste Kern einen festen Kern aufweist, der Molinat in einer zur Unkrautbekämpfung unter kontrollierten Freisetzungsbedingungen wirksamen Menge enthält, und die Überzugsschicht über dem Kern wenigstens eine Schicht aus einem Copolymer von annähernd stöchiometrischen Mengen Dicyclopentadien und eines Triglyzerids einer ungesättigten Fettsäure, die ungesättigt genug ist, um mit Dicyclopentadien zu reagieren und durch Reaktion mit Sauerstoff zu trocknen, aufweist und insgesamt zwischen 6 bis 30%, bezogen auf das Gewicht des Kerns, ausmacht.

17. Mischteilchen nach Anspruch 1, wobei der pestizidhaltige feste Kern einen geformten Kern aufweist, der Malathion in einer zur Kontrolle von Insekten unter kontrollierten Freisetzungsbedingungen wirksamen Menge enthält, und die Überzugsschicht über dem Kern wenigstens eine Schicht aus einem Copolymer von annähernd stöchiometrischen Mengen Dicyclopentadien und eines Triglyzerids einer ungesättigten Fettsäure, die ungesättigt genug ist, um mit Dicyclopentadien zu reagieren und durch Reaktion mit Sauerstoff zu trocknen, aufweist und insgesamt zwischen 2 und 30%, bezogen auf das Gewicht des Kerns, ausmacht.

18. Verfahren zum Töten von Insekten auf Zuchtpflanzen ohne Schaden für solche Pflanzen, wobei das Verfahren das Auslegen von überzogenen, freisetzungskontrollierten carbofuranhaltigen Körnern auf dem Erdboden benachbart zu den Pflanzen einschließt, wobei jedes der Körner zwischen 2 und 30% eines Überzugsharzes trägt, welches ein Copolymer aus etwa 38% Dicyclopentadien und etwa 62%, nach Gewicht, ungesättigten Fettöls oder Glyzerids einer ungesättigten Fettsäure, die ungesättigt genug ist, um mit Dicyclopendadien zu reagieren und durch Reaktion mit Sauerstoff zu trocknen, ist und die Körner in einer zum Töten von Schadinsekten unter kontrollierten Freisetzungsbedingungen genügenden Menge eingepflanzt werden.

19. Verfahren nach Anspruch 18, wobei die Körner in einer Menge eingepflanzt werden, die zwischen 0,6 und 22 Kg aktiven Bestandteil pro Hektar eingesäter Fläche (0,5 bis 20 pounds/acre) liefert.

20. Verfahren zum Kontrollieren von Unkräutern in Reisfeldern, wobei das Verfahren das Eintragen von

57

freisetzungskontrollierten Körnern, die als aktiven Bestandteil Molinat oder Thiobencarb enthalten, in ein mit Wasser überflutetes und mit Reis eingesätes Reisfeld benachbart zum Reis einschließt und jedes solches Korn mit 2 bis 30 Gew.-% eines Copolymers aus etwa 38% Dicyclopentadien und etwa 62 Gew.-% eines Glyzerids einer ungesättigten Fettsäure überzogen ist, wobei eine solche Fettsäure ungesättigt genug sein muß, um mit dem Dicyclopentadien zu reagieren und durch Reaktion mit Sauerstoff zu trocknen, und die Körner in einer Menge zugegeben werden, durch die das Unkrautwachstum in solch einem Feld kontrolliert wird.

21. Verfahren zum Kontrollieren von Unkräutern in Reisfeldern, wobei das Verfahren das Einbringen einer zur Kontrolle besagter Unkräuter wirksamen Menge von freisetzungskontrollierten Körnern, die Molinat oder Thiobencarb enthalten, in das Reisfeld vor dem Überfluten mit Wasser einschließt und jedes solches Korn mit 20 bis 30 Gew.-% eines Copolymers aus etwa 38% Dicyclopentadien und etwa 62% eines Glyzerids einer ungesättigten Fettsäure, die ungesättigt genug ist, um mit dem Dicyclopentadien zu reagieren und durch Reaktion mit Sauerstoff zu trocknen, überzogen ist.

22. Verfahren nach Anspruch 20 oder 21, wobei die Körner in einer Menge von zwischen 22 und 112 Kg pro eingesätem Hektar (20 bis 100 pounds/acre) zugegeben werden.

23. Verfahren zum Töten oder zum Hemmen über einen ausgedehnten Zeitraum von Insekten und Larven, die im Wasser leben und pflanzliches Leben schädigen, wobei das Verfahren das Einführen von freisetzungskontrollierten Mischkörnern, die im wesentlichen aus einem Kern, der, bezogen auf das Gewicht des Kerns, zwischen 0,06 und 10 Gew.-% Malathion enthält, und einer Überzugsschicht über dem Kern aus wenigstens einer Schicht eines harzartigen Copolymers aus etwa 38% Dicyclopentadien und etwa 62% eines Glyzerids einer ungesättigten Fettsäure, die ungesättigt genug ist, um mit dem Dicyclopentadien zu reagieren und durch Reaktion mit Sauerstoff zu trocknen, besteht, in die Wasserflächen, die solche Insekten und Larven enthalten oder dazu neigen, einschließt.

24. Verfahren zum Kontrollieren von Schädlingen auf landwirtschaftlichen Zuchtflächen, wobei das Verfahren das Ausbringen von freisetzungskontrollierten Körnern, die eine zum Töten oder Hemmen solcher Schädlinge wirksame Menge an Pestizid enthalten, auf Zuchtflächen einschließt, jedes solches Korn eine Überzugsschicht aus zwischen 2 bis 30 Gew.-% eines Copolymers aus etwa 38% Dicyclopentadien und etwa 62%, nach Gewicht, eines Triglyzerids einer Fettsäure, die ungesättigt genug ist, um mit dem Dicyclopentadien zu reagieren und durch Reaktion mit Sauerstoff zu trocknen, aufweist und mehrere verschliedene Körner mit unterschliedlichen Mengen einer solchen Überzugsschicht ausgebracht werden, um für ausgedehnte Freisetzungsprofile des eingesetzten Pestizids zu sorgen.

25. Verfahren zum Kontrollieren von Schädlingen über einen ausgedehnten Zeitraum mit einer einzigen Anwendung, die zu der Zeit vorgenommen wird, in der eine Pflanze in ein Loch verpflanzt wird, wobei das Verfahren das Einpflanzen von freisetzungskontrollierten Körnern, die eine zum Töten oder Hemmen solcher Schädlinge wirksame Menge an Pestizid enthalten, in das Loch zum Zeitpunkt des Verpflanzens, wobei jedes solches Korn einen Überzug aus zwischen 2 bis 30 Gew.-% eines Copolymers aus etwa 38% Dicyclopentadien oder etwa 62%, nach Gewicht, eines Triglyzerids einer Fettsäure, die ungesättigt genug ist, um mit besagtem Dicyclopentadien zu reagieren und durch Reaktion mit Sauerstoff zu trocknen, aufweist, und das anschließende Füllen des besagten Loches mit Erdboden einschließt.

26. Verfahren zum Kontrollieren von Schädlingen auf landwirtschaftlichen Zuchtflächen unter Verwendung eines Pestizids, das einem mikrobiologischen Abbau unterworfen ist, wobei das Verfahren das Ausbringen von freisetzungskontrollierten Körnern, die eine zum Töten oder Hemmen solcher Schädlinge wirksame Menge an Pestizid enthalten, auf Zuchtflächen einschließt und jedes solches Korn eine Überzugsschicht aus zwischen 2 bis 30 Gew.-% eines Copolymers aus etwa 38% Dicyclopentadien und etwa 62%, nach Gewicht, eines Triglyzerids einer Fettsäure, die ungesättigt genug ist, um mit dem Dicyclopentadien zu reagieren und durch Reaktion mit Sauerstoff zu trocknen, aufweist.

27. Verfahren zum Herstellen von Mischteilchen nach Anspruch 1, wobei das Verfahren das Vorlegen einer sich durcheinander bewegenden Masse von Kerteilchen in einer Behandlungszone, das Aufbringen einer Lösung einer wirksamen Menge eines Pestizids in einem organischen Lösungsmittel auf eine solche Masse, das anschließende Trocknen, die langsame Zugabe einer Menge einer Lösung eines Copolymers aus etwa 38 Gew.-% Dicyclopentadien oder etwa 62 Gew.-% Leinöl oder maleinisiertem Sojabohnenöl in einem leicht verdampfbaren organischen Lösungsmittel zu besagten behandelten Kernteilchen, die das besagte Pestizid enthalten, um für eine Anfangsschicht eines solchen Copolymers zu sorgen, die das besagte Kernteilchen umhüllt, das Trocknen und Aushärten des besagten Copolymers, das wenigstens einmalige Wiederholen einer solchen Zugabe der besagten Lösung des Copolymers, und das Trocknen und Aushärten, um umhüllte Mischkörner zu bilden, einschließt.

28. Verfahren nach Anspruch 27, wobei die Anfangsschicht zwischen 2 und 4 Gew.-% des Copolymers liefert.

29. Verfahren nach Anspruch 28, wobei eine solche Gesamtüberzugsschicht zwischen 2 bis 30 Gew.-% des Copolymers aufweist.

30. Verfahren nach Anspruch 27, 28 oder 29, wobei das Pestizid Carbofuran ist und in einer Menge von zwischen 0,06 bis 10 Gew.-%, bezogen auf das Gewicht des Kerns, vorgesehen ist.

31. Verfahren nach Anspruch 27, 28 oder 29, wobei das Pestizid Molinat ist und in einer Menge von zwischen 0,0 und 20% vorgesehen ist.

32. Verfahren nach Anspruch 27, 28 oder 29, wobei das Pestizid Malathion ist und in einer Menge von zwischen 0,1 und 20% vorgesehen ist.

33. Verfahren nach Anspruch 27, 28 oder 29, wobei das Pestizid wenigstens eines ausgewählt aus Carbofuran, Molinat, Malathion, Thiobencarb, Fenamiphos, EPTC, Carboxin, Ocephat, Disulfoton, Oxydemetonmethyl, Fluvalinat, Monochlorphenoxyessigsäure, Bifenox, Fenvalerat, Butachlor, bacillus thuringiensis israeliensis, Perfluodon, Permethrin, Aldicarb und Dicamba ist.

34. Verfahren zum Herstellen von Mischteilchen nach Anspruch 1, wobei das Verfahren das Vorlegen einer sich durcheinander bewegenden Masse von Körnern, die ein erstes Pestizid enthalten und eine wirksame Menge eines ersten Pestizids aufweisen, in einer Behandlungszone, das langsame Zugeben einer Menge eines Copolymers aus einem Addukt zwischen einem konjugierten Dien und einem Triglyzerid einer Fettsäure, die ungesättigt genug ist, um mit dem Dien zu reagieren und durch Reaktion mit Sauerstoff zu trocknen, zu den Körnern, das Trocknen, um umhüllte Körner zu bilden, die erstes Pestizid enthalten, wobei die Menge an Copolymer genügen muß, um für eine langsame oder kontrollierte Freisetzung des Pestizids zu sorgen, das Aufbringen einer wirksamen Menge eines zweiten Pestizids, gelöst in einem organischen Lösungsmittel, auf die umhüllten Körner, das Eintrocknen der Lösung des zweiten Pestizids, um Körner mit mehreren Pestiziden zu bilden, das langsame Zugeben einer weiteren Menge des Copolymers in einer Behandlungszone zu solchen Körnern, die mehrere Pestizide enthalten, um umhüllte Körner zu bilden, die mehrere Pestizide enthalten, das Trocknen und Aushärten einschließt.

35. Verfahren zum Herstellen eines Mischteilchens nach Anspruch 1, wobei das Verfahren das Aufbringen einer Lösung eines Pestizids in einem organischen Lösungsmittel in einer zur Kontrolle eines Schädlings, den man beabsichtigt zu töten oder zu hemmen, unter kontrollierten Freisetzungsbedingungen genügenden Menge zu festen Kernteilchen, das Verdampfen des Lösungsmittels, so daß das Pestizid über dem Kernteilchen abgelagert zurückbleibt, das Aufbringen von wenigstens einer Schicht eines Copolymers von annähernd stöchiometrischen Mengen Dicyclopentadien und eines Triglyzerids einer ungesättigten Fettsäure, die ungesättigt genug ist, um mit dem Dicyclopentadien zu reagieren und durch Reaktion mit Sauerstoff zu trocknen, auf das Kernteilchen und das abgelagerte Pestizid, und das Trocknen und Aushärten des Copolymers bei einer Temperatur von zwischen 60°C und 71°C (140°F bis 160°F), um Mischteilchen zu bilden, einschließt.

## Revendications

1. Particule composite séparée destinée à fournir une libération programmée d'un ingrédient pesticide actif quand on la met en contact avec l'eau, cette particule comprenant un noyau solide renfermant un pesticide, le pesticide étant présent en une quantité efficace pour maîtriser la prolifération d'un parasite devant être tué ou inhibé, à mesure de sa libération par la particule dans les conditions d'une libération programmée, et un enrobage sur le noyau comprenant au moins une couche d'un produit d'addition ou d'un copolymère d'un diène conjugué et d'une quantité à peu près stoechiométrique de radicaux d'acides gras insaturés, les radicaux d'acides gras étant fournis par un lipide et présentant une insaturation suffisante pour former un produit d'addition avec le diène et pour durcir par réaction avec l'oxygène, l'enrobage analogue à une membrane étant présent en une quantité suffisante pour assurer une libération programmée du pesticide en cours d'usage.

2. Particule composite selon la revendication 1, dans laquelle le diène est choisi dans le groupe comprenant le dicyclopentadiène, le furanne, le méthyldicyclopentadiène, le styrène, l'α-méthylstyrène, le butadiène et le polybutadiène liquide et/ou le lipide est un ester de tels radicaux d'acides gras et d'un alcool choisi parmi le glycérol, le pentaérythritol, le sorbitol, le triméthylolpropane, le triméthylol-éthane, l'inositol et le 2,2,6,6-tétraméthylol-cyclohexanol.

3. Particule composite selon la revendication 2, dans laquelle le diène est le dicyclopentadiène et le lipide est un triglycéride d'acide gras.

4. Particule composite selon la revendication 1, 2 ou 3, dans laquelle le lipide est choisi parmi l'huile de lin, l'huile de soja, l'huile de soja maléinisée, le tallol maléinisé, l'huile de poisson, l'huile de carthame, l'huile de tournesol, l'huile de noix, l'huile d'abrasin, l'huile de ricin déshydratée et l'huile d'oiticica.

5. Particule composite selon l'une quelconque des revendications précédentes, dans laquelle le noyau comprend un engrais.

6. Particule composite selon l'une quelconque des revendications précédentes, dans laquelle ledit noyau est un granule préformé choisi parmi le groupe formé par l'argile attapulgite, les épis de maîs broyés, le sable de silice et le kaolin.

7. Particule composite selon l'une quelconque des revendications précédentes, dans laquelle le pesticide est un carbamate insecticide, un thiocarbamate herbicide, un insecticide ou un nématocide organo-phosphoré ou un pyréthroïde synthétique.

8. Particule composite selon l'une quelconque des revendications précédentes, dans laquelle le pesticide est choisi parmi le carbofuranne, le molinate, le malathion, le fénamiphos, le EPTC, la carboxine, l'acéphate, la disulfotone, l'oxydémétonméthyle, le fluvalinate, l'acide monochlorophénoxyacétique, le bifenox, le fenvalérate, le butachlore, le thiobencarbe, la toxine protéinique de BTI, la perfluidone, la permethrine, l'aldicarbe et le dicamba.

9. Particule composite selon la revendication 8, dans laquelle la particule composite contient au moins deux pesticides spécifiés différents.

10. Particule composite selon l'une quelconque des revendications précédentes, dans laquelle les radicaux d'acides gras sont ceux des acides gras choisis parmi les acides linoléique, linolénique, eléostéarique, licanique, arachidonique et clupenodonique et les mélanges de deux ou plusieurs de ces acides les uns avec les autres.

11. Particule séparée selon la revendication 1, dans laquelle l'enrobage comprend au moins une couche d'une proportion à peu près stoechiométrique d'un copolymère de dicyclopentadiene et d'un triglycéride d'acide gras insaturé ayant une insaturation suffisante pour réagir avec le dicyclopentadiène et sécher par réaction avec l'oxygène, le total de l'enrobage étant de 2 à 30% en poids par rapport au noyau.

12. Particule composite selon la revendication 11, dans laquelle l'enrobage comprend de 30 à 35% de dicyclopentadiène et de 70 à 55% du triglycéride.

13. Particule séparée selon la revendication 11, dans laquelle l'enrobage comprend au moins une couche d'un copolymère d'environ 38% en poids de dicyclopentadiène et 62% en poids d'un triglycéride d'acide gras insaturé, le triglycéride ayant une insaturation suffisante pour réagir avec le dicyclopentadiène et sécher par réaction avec l'oxygène, le total par rapport au poids du noyau étant de 2 à 30% d'enrobage, le pesticide étant choisi parmi le carbofuranne, le molinate et le malathion.

14. Particule composite selon la revendication 13, dans laquelle le glycéride comprend de 40 à 100% en poids d'huile de lin et de 0 à 60% d'huile de soja.

15. Particule composite selon la revendication 1, dans laquelle le noyau solide contenant le pesticide comprend un noyau formé contenant du carbofuranne en une quantité efficace pour maîtriser la prolifération des insectes devant être tués ou neutralisés dans des conditions de libération programmée et dans laquelle l'enrobage sur le noyau comprend au moins une couche d'un copolymère de quantités à peu près stoechiométriques de dicyclopentadiène et d'un triglycéride d'acide gras insaturé ayant une insaturation suffisante pour réagir avec le dicyclopentadiène et sécher par réaction avec l'oxygène, le total de l'enrobage étant de 2 à 30% par rapport au poids du noyau.

16. Particule composite selon la revendication 1, dans laquelle le noyau solide contenant le pesticide comprend un noyau solide renfermant du molinate présent en une quantité efficace pour maîtriser la prolifération des mauvaises herbes dans les conditions de libération programmée et dans laquelle l'enrobage sur le noyau comprend au moins une couche d'un copolymère de quantités à peu près stoechiomètriques de dicyclopentadiène et d'un triglycéride d'acide gras insaturé ayant une insaturation suffisante pour réagir avec le dicyclopentadiène et sécher par réaction avec l'oxygène, le total de l'enrobage étant de 6 à 30% par rapport au poids du noyau.

17. Particule composite selon la revendication 1, dans laquelle le noyau solide contenant le pesticide comprend un noyau formé renfermant du malathion en une quantité efficace pour maîtriser la prolifération des insectes dans les conditions d'une libération programmée et dans laquelle l'enrobage sur le noyau comprend au moins une couche d'un copolymère de quantités à peu près stoechiométriques de dicyclopentadiène et d'un triglycéride d'acide gras insaturé ayant une insaturation suffisante pour réagir avec le dicyclopentadiène et sécher par réaction avec l'oxygène, le total de l'enrobage étant de 2 à 30% par rapport au poids du noyau.

18. Procédé pour tuer des insectes sur des plants en croissance sans endommager ces plants, qui consiste à placer sur le sol adjacent auxdits plants des granules enrobés contenant du carbofuranne à libération programmée, chaque granule portant de 2 à 30% de résine d'enrobage qui est un copolymère d'environ 38% de dicyclopentadiène et environ 62% en poids d'une huile grasse insaturée ou d'un glycéride d'acide gras insaturé présentant une insaturation suffisante pour réagir avec le dicyclopentadiène et sécher par réaction avec l'oxygène, les granules étant implantés en une quantité suffisante pour tuer les insectes qui infestent les plants dans des conditions de libération programmée.

19. Procédé selon la revendication 18, dans lequel les granules sont implantés en une quantité donnant de 0,5 à 20 livres d'ingrédient actif par acre de surface ensemencée (0,6 à 22 kg/hectare).

20. Procédé pour maîtriser la prolifération des mauvaises herbes dans des champs de riz, procédé qui consiste à introduire dans une rizière inondée avec de l'eau et ensemencée avec du riz, en position adjacente au riz, des granules à libération contrôlée contenant l'ingrédient actif molinate ou thiobencarbe et chaque granule étant enrobé avec 2 à 30% en poids d'un copolymère d'environ 38% de dicyclopentadiène et environ 62% en poids d'un glycéride d'un acide gras insaturé, cet acide gras ayant une insaturation suffisante pour réagir avec le dicyclopentadiène et pour sécher par réaction avec l'oxygène, les granules étant ajoutés en une quantité permettant d'empêcher la croissance des mauvaises herbes dans une telle rizière.

21. Procédé pour maîtriser la prolifération des mauvaises herbes dans des champs de riz, procédé qui consiste à introduire dans le champ de riz, avant de l'inonder avec de l'eau, une quantité efficace de granules à libération programmée contenant du molinate ou du thiobencarbe pour maîtriser la prolifération desdites mauvaises herbes, chaque granule étant enrobé avec 2 à 30% en poids d'un copolymère d'environ 38% de dicyclopentadiène et environ 62% d'un glycéride d'un acide gras insaturé ayant une insaturation suffisante pour réagir avec le dicyclopentadiène et sécher par réaction avec l'oxygène.

60

# 0 079 668

22. Procédé selon la revendication 20 ou 21, dans lequel on ajoute les granules à raison de 20 à 100 livres par acre ensemencé (22 à 112 kg/ha).

23. Procédé de destruction ou d'inhibition, au cours d'une période de temps prolongée, des insectes et des larves qui vivent dans l'eau et qui sont nuisibles à la vie des plants, procédé qui consiste à introduire dans les zones submergées contenant ou susceptibles de contenir de tels insectes et larves des granules composites à libération programmée consistant essentiellement en un noyau contenant de 0,06% à 10% en poids, par rapport au poids du noyau, de malathion et un enrobage sur le noyau d'au moins une couche d'un copolymère résineux d'environ 38% de dicyclopentadiène et environ 62% d'un glycéride d'acide gras insaturé ayant une insaturation suffisante pour réagir le dicyclopentadiène et sécher par réaction avec l'oxygène.

24. Procédé pour maîtriser la prolifération des parasites dans les zones de culture agricole, procédé qui consiste à introduire dans les zones cultivées des granules à libération programmée contenant une quantité efficace d'un pesticide pour tuer ou inhiber de tels parasites, ces granules ayant chacun un enrobage de 2% à 30% en poids d'un copolymère d'environ 38% de dicyclopentadiène et environ 62%, en poids, d'un triglycéride d'un acide gras ayant une insaturation suffisante pour réagir avec le dicyclopentadiène et sécher par réaction avec l'oxygène, une série de granules différents comportant des quantités différentes d'un tel enrobage étant introduite pour assurer des courbes prolongées de libération du pesticide en cours d'usage.

25. Procédé pour maîtriser la prolifération des parasites au cours d'une période de temps prolongée, par une seule application effectuée lors de la transplantation d'un plant dans un trou, procédé qui consiste à implanter dans le trou, lors de la transplantation, des granules à libération programmée contenant une proportion efficace de pesticide pour tuer ou inhiber de tels parasites, chacun de ces granules ayant un enrobage de 2 à 30% en poids d'un copolymère d'environ 38% de dicyclopentadiène et environ 62%, en poids, d'un triglycéride d'un acide gras ayant une insaturation suffisante pour réagir avec ledit dicyclopentadiène et pour sécher par réaction avec l'oxygène, et ensuite à remplir ledit trou avec de la terre.

26. Procédé pour maîtriser la prolifération des parasites dans les zones de culture agricole, utilisant un pesticide sujet à une dégradation microbiologique, procédé qui consiste à employer dans les zones cultivées des granules à libération programmée contenant une proportion efficace de pesticide pour tuer ou inhiber de tels parasites, chacun de ces granules portant un enrobage de 2 à 30% en poids d'un copolymère d'environ 38% de dicyclopentadiène et environ 62%, en poids, d'un triglycéride d'un acide gras ayant une insaturation suffisante pour réagir avec le dicyclopentadiène et sécher par réaction avec l'oxygène.

27. Procédé de préparation de particules composites selon la revendication 1, procédé qui consiste à introduire une masse en mouvement giratoire de particules formant noyau dans une zone de traitement, à mettre en contact une telle masse avec une solution d'une quantité efficace d'un pesticide dans un solvant organique, puis à faire sécher, à ajouter lentement auxdites particules formant noyau traitées et contenant ledit pesticide une certaine quantité d'une solution dans un solvant organique volatilisable d'un copolymère d'environ 38% en poids de dicyclopentadiène et environ 62% en poids d'huile de lin ou d'huile de soja maléinisée, afin de fournir une couche initiale de ce ropolymère, à enrober lesdites particules formant noyau traitées, à sécher et à faire durcir ledit copolymère, à répéter une telle addition de ledite solution de copolymère au moins une fois, et à sécher et faire durcir pour obtenir des granules composites enrobés.

28. Procédé selon la revendication 27, dans lequel la couche initiale représente de 2 à 4% en poids du copolymère.

29. Procédé selon la revendication 28, dans lequel cet enrobage total comprend de 2 à 30% en poids du copolymère.

30. Procédé selon la revendication 27, 28 ou 29, dans lequel le pesticide est le carbofuranne et est présent à raison de 0,06% à 10% en poids par rapport au poids du noyau.

31. Procédé selon la revendication 27, 28 ou 29, dans lequel le pesticide est le molinate et est présent à raison de 0,0% à 20%.

32. Procédé selon la revendication 27, 28 ou 29, dans lequel le pesticide est le malathion et est présent à raison de 0,1 à 20%.

33. Procédé selon la revendication 27, 28 ou 29, dans lequel le pesticide est au moins un pesticide choisi parmi le carbofuranne, le molinate, le malathion, le thiobencarbe, le fenamiphos, l'EPTC, la carboxine, l'acéphate, la disulfotone, l'oxydemétonméthyle, le fluvalinate, l'acide monochloro-phénoxy-acétique, le bifénox, le fenvalérate, le butachlore, le bacillus thuringiensis israeliensis, la perfluodone, la permethrine, l'aldicarbe et le dicamba.

34. Procédé de préparation de particules composites selon la revendication 1, procédé qui consiste à introduire dans une zone de traitement une masse en mouvement giratoire de granules contenant un premier pesticide ayant une proportion efficace d'un premier pesticide, à ajouter lentement aux granules une certaine quantité d'un copolymère d'un produit d'addition d'un diène conjugué et d'un triglycéride d'un acide gras ayant une insaturation suffisante pour réagir avec le diène et sécher par réaction avec l'oxygène, et à faire sécher pour former des granules enrobés contenant un premier pesticide, la quantité du copolymère étant suffisante pour assurer une libération lente ou programmée du pesticide, à mettre en

61

contact avec les granules enrobés une proportion efficace d'un second pesticide en solution dans un solvant organique, à sécher la solution du second pesticide pour former des granules ayant des pesticides multiples, à ajouter lentement à ces granules à pesticides multiples dans la zone de traitement une nouvelle quantité du copolymère, pour former des granules enrobés à pesticides multiples, à faire sécher et à faire durcir.

35. Procédé de fabrication de particules composites selon la revendication 1, procédé qui consiste à mettre en contact avec une particule solide formant noyau une solution dans un solvant organique d'un pesticide en une quantité suffisante pour maîtriser la prolifération d'un parasite qu'on se propose de tuer ou de maîtriser dans des conditions de libération programmée, à volatiliser le solvant de telle sorte que le pesticide reste déposé sur les particules formant noyau, à appliquer sur les particules formant noyau et le pesticide déposé au moins une couche d'un copolymère de quantités approximativement stoechiométriques d'un dicyclopentadiène et d'un triglycéride d'acide gras insaturé ayant une insaturation suffisante pour réagir avec le dicyclopentadiène et pour sécher par réaction avec l'oxygène, et à sécher et faire durcir le copolymère à une température de 140°F à 160°F (de 60°C à 71°C) pour former le granule composite.

## FIG. 1

COATED PRILL

UNCOATED PRILL

## FIG. 4

UNCOATED PRILL

COATED PRILLS

FIG. 2

0 079 668

2

FIG. 3

LEGEND
18 pph
14 pph
12 pph
10 pph
8 pph
4 pph
6 pph

COATED PRILLS

UNCOATED PRILL

0 pph

μg MOLINATE FOUND PER 100 ML WATER

10,000

1,000

100

10

1 2          7          14          21

DAYS

## FIG. 5

CARBOFURAN

X .06/10+4 ATTAPULGITE 8/16 *
O .06/14 +4 ATTAPULGITE 16/30

CARBOFURAN

X .06/10+6 CORN COBS 8/14
O .06/16+8 CORN COBS 14/40

CARBOFURAN

X .06/6+2 UREA #1
O .06/8+4 UREA #2

CARBOFURAN

X .06/14+4 FULLERS EARTH 10/30
O .06/14+6 FULLERS EARTH 10/30

CARBOFURAN

SLOPE = 0.9
21-7-14 FERTILIZER
6/14 MESH 6 pph COATING

CARBOFURAN

SLOPE = 0.3
21-7-14 FERTILIZER
6/14 MESH 12 pph COATING

\* LEGENDS GIVE:

% / pph
TOXICANT / RESIN      CARRIER & MESH SIZE
         / ADDITIONS

4

FIG.6

LEGENDS GIVE:

%/pph
TOXICANT/RESIN     CARRIER & MESH SIZE
/ADDITIONS

5